# EUROPÄISCHE PATENTSCHRIFT

(11) **EP 0 918 646 B1**
(45) Veröffentlichungstag und Bekanntmachung des Hinweises auf die Patenterteilung: **28.06.2000**
(21) Anmeldenummer: 97929081.4
(22) Anmeldetag: 16.07.1997
(51) Int. Cl.: B42C 19/00, B07C 1/02, B07C 3/00, B07C 5/00, B65G 37/02, H05K 13/08

(54) **BEARBEITUNGSVERFAHREN ZUR BEARBEITUNG VON STÜCKGUT SOWIE STEUERVERFAHREN UND EINRICHTUNG ZUR DURCHFÜHRUNG DES BEARBEITUNGSVERFAHRENS**
OPERATION FOR PROCESSING PIECE GOODS AS WELL AS CONTROL PROCESS AND FACILITY FOR CARRYING OUT THE PROCESSING OPERATION
PROCEDE DE TRAITEMENT DE PIECES, ET PROCEDE DE COMMANDE ET DISPOSITIF POUR METTRE EN OEUVRE LEDIT PROCEDE DE TRAITEMENT

(30) Priorität: 19.07.1996 CH 182296
(43) Veröffentlichungstag der Anmeldung: 02.06.1999
(73) Patentinhaber: Ferag AG, 8340 Hinwil (CH)
(72) Erfinder: REIST, Walter, CH-8340 Hinwil (CH)
(74) Vertreter: Frei, Alexandra Sarah
(86) Internationale Anmeldenummer: CH9700276
(87) Internationale Veröffentlichungsnummer: WO9803347

(56) Entgegenhaltungen:
- EP-A- 0 680 916
- EP-A- 0 716 037
- US-A- 4 531 061
- US-A- 4 817 778
- US-A- 4 854 439
- US-A- 5 025 610
- US-A- 5 062 524
- US-A- 5 388 703
- "BINDERY BOOK TRACKING SYSTEM" RESEARCH DISCLOSURE, Nr. 348, 1.April 1993, Seite 241 XP000304181

## Beschreibung

Die Erfindung liegt auf dem Gebiete der Bearbeitung von Stückgut und betrifft ein Verfahren gemäss dem Oberbegriff des ersten unabhängigen Anspruchs, sowie ein Steuerverfahren und eine Einrichtung gemäss den Oberbegriffen der entsprechenden, unabhängigen Ansprüche, die zur Steuerung bzw. zur Durchführung des erfindungsgemässen Verfahrens dienen. In dem erfindungsgemässen Bearbeitungsverfahren wird Stückgut bearbeitet, wobei im Rahmen des vorliegenden Textes unter Stückgut Gegenstände verstanden werden sollen, die in sehr hohen Zahlen bearbeitet werden, die für die Bearbeitung vorwiegend einzeln zu handhaben sind, die vorteilhafterweise vorwiegend in einer irgendwie geordneten Konfiguration gehandhabt werden (im Gegensatz zu Schüttgut) und deren Eigenschaften mindestens teilweise gleich oder ähnlich sind (z.B. verschiedene Druckprodukte und Teilprodukte für Druckprodukte), derart, dass nacheinander in der gleichen Weise zu handhabende oder zu bearbeitende Gegenstände mit im wesentlichen denselben Mitteln handhabbar und bearbeitbar sind.

Unter einem Bearbeitungsverfahren für Stückgut soll im Rahmen des vorliegenden Textes ein Verfahren verstanden werden,
- in das Gegenstände (Ausgangsprodukte) in Form von mindestens einem Produktestrom zugeführt werden (z.B. Druckprodukte oder Teilprodukte ab Rotation oder ab Lager),
- in dem in mindestens einem Bearbeitungsschritt Ausgangsprodukte und/oder Zwischenprodukte bearbeitet werden, wobei durch den Bearbeitungsschritt (z.B. Schneiden, Heften, Binden, Adressieren, Falten) mindestens eine Eigenschaft eines die Bearbeitung durchlaufenden Produktes verändert wird und/oder wobei durch den Bearbeitungsschritt Produkte miteinander vereinigt werden (Sammeln, Einstecken, Zusammentragen, Stapeln), wodurch ein Produkt (vereinigte Teilprodukte) entsteht, dessen Eigenschaften sich unterscheiden von den Eigenschaften der Teilprodukte, und
- aus dem Gegenstände als Endprodukte wiederum in mindestens einem Produktestrom weggeführt werden.

Ein solches Verfahren ist z.B. aus EP-A-716 037 bekannt.

Die dem Bearbeitungsverfahren zuzuführenden Gegenstände werden beispielsweise aus einem entsprechenden Herstellungsverfahren bereits als Produktestrom zugeliefert (z.B. aus Rotation) oder sie stammen aus Lagern, wo sie in diskreten Lagerformationen (z.B. Wickel, Stapel) gelagert sind, welche Lagerformationen für die Zuführung in das Bearbeitungsverfahren in Produkteströme gewandelt werden. Die in Form von Produkteströmen aus dem Bearbeitungsverfahren weggeförderten Endprodukte können in einem zusätzlichen Bearbeitungsschritt gruppenweise zusammengefasst werden, beispielsweise zu Versandeinheiten (z.B. Pakete). Es ist auch möglich, nach Bearbeitungsschritten anfallende Produkteströme von Zwischenprodukten in diskrete Lagerformationen (z.B. Wickel, Stapel) zu wandeln und nach einer Zwischenlagerung zur Weiterbearbeitung wieder zu Produkteströmen zu wandeln.

Für verschiedene Bearbeitungsschritte sind im wesentlichen stationäre automatisierte Bearbeitungsstationen vorgesehen, denen Produkteströme zugefördert werden und von denen Produkteströme weggefördert werden, wobei die Produkte während einer Bearbeitung kontinuierlich weitergefördert werden oder für die Bearbeitung gestoppt werden. Die Produkteströme bestehen im wesentlichen aus einzelnen, hintereinander geförderten Gegenständen (Produkten), die einzeln bearbeitet werden, oder aus Gruppen von Gegenständen, wobei die Gegenstände einer Gruppe im wesentlichen parallel bearbeitet werden.

Bearbeitungsverfahren von der Art, wie sie oben beschrieben ist, sind nicht nur bekannt aus Verfahren zur Bearbeitung von Erzeugnissen von Druckmaschinen, auf die sich auch die in den vorstehenden Abschnitten in Klammern angegebenen Beispiele beziehen, sondern ebenfalls beispielsweise aus der Herstellung von bestückten Leiterplatten, aus der Verpackungsindustrie (z.B. Waschen, Kontrollieren und Befüllen von Getränkeflaschen) und aus vielen anderen Industriezweigen, in denen eben Stückgut bearbeitet wird.

Derartige Stückgut-Bearbeitungsverfahren sind im Laufe der letzten Jahrzehnte dahingehend entwickelt worden, dass in weniger Zeit mehr Gegenstände bearbeitbar wurden, wozu Bearbeitungsvorrichtungen und Fördersysteme mit immer steigenden Stückleistungen entwickelt wurden. Dabei trug das Übergeben auf Transportmittel, die es erlauben, die Gegenstände einzeln geführt zu fördern und während der Förderung zu bearbeiten, ohne die Gegenstände für die Bearbeitung an spezielle Führungsmittel zu übergeben und ohne die Förderbewegung zu unterbrechen, wesentlich zu dieser Entwicklung bei. Derartige Transportmittel sind beispielsweise Transportketten mit äquidistant daran befestigten Greifern zum Ergreifen von einzelnen Gegenständen und zum Halten der ergriffenen Gegenstände in einer mehr oder weniger definierten Position.

Die genannte Entwicklung hat es mit sich gebracht, dass der Bearbeitungsaufwand pro Stück drastisch gesenkt werden konnte, dies aber nur unter der Voraussetzung, dass im wesentlichen identische Gegenstände in sehr hohen Stückzahlen bearbeitet werden können oder dass die Gegenstände erst im möglichst letzten Schritt der Bearbeitung eine spezifische Identität erhalten (z.B. durch Adressieren).

Es zeigt sich nun aber, dass auf verschiedensten Gebieten durch entsprechende Herstellungsverfahren bedingte, sehr hohe Stückzahlen identischer Gegenstände den Markt derart belasten, dass die Absatzpreise entsprechend gesenkt werden müssen, was sich wiederum negativ auf die Verfahrensökonomie der Bearbeitung auswirkt. Ein Ausweg aus dieser sich negativ auswirkenden Spirale könnte nun darin bestehen, die genannten Bearbeitungsverfahren dahingehend zu entwickeln, dass damit durch verschiedene Bearbeitung von identischen oder verschiedenen Ausgangsprodukten verschiedene Endprodukte hergestellt werden können und zwar nicht nur in zeitlich hintereinander durchgeführten, sonst aber im wesentlichen voneinander unabhängigen Prozessen, sondern auch in vorgebbaren, im Verhältnis zu den zu bearbeitenden Stückzahlen schnell wechselnden und zudem unregelmässigen Sequenzen (z.B. Herstellung verschiedenster Druckprodukte in einer Postrouten-gerechten Sequenz). Eine derartige Entwicklung führt unumgänglich zu einer höheren Zahl von notwendigen Bearbeitungsschritten und zu höheren Anforderungen an die Flexibilität (Fähigkeit, schnelle zeitliche Wechsel zu verkraften) von Verfahren und Einrichtungen.

Eine derartige Entwicklung ist auch wünschenswert aufgrund des Bedürfnisses, immer mehr Bearbeitungsschritte mit in ein hoch automatisierbares Bearbeitungsverfahren einzubeziehen, welche ursprünglich an den aus automatisierten Bearbeitungsverfahren anfallenden Endprodukten durch Personal ausgeführt wurden (z.B. verschiedene Zahlen von verschiedenen Druckprodukten zu Gruppen zusammenfügen, adressieren und dem der Adresse entsprechenden Verteiler zuweisen).

Ein Bedürfnis nach einer derartigen Entwicklung besteht auch auf der Absatzseite, da der Käufer der bearbeiteten Gegenstände eher bereit ist, zu einem angemessenen Preis zu kaufen, wenn er, ohne eine Lieferverzögerung in Kauf nehmen zu müssen, ein Produkt erhält, das genauer auf seine Wünsche abgestimmt ist.

Aufgrund der beschriebenen Bedürfnisse, die alle in derselben Richtung (sich voneinander unterscheidende Endprodukte in relativ schneller Sequenz) deuten, ist denn auch auf dem Gebiete der Stückgut-Bearbeitung in den letzten Jahren eine entsprechende Entwicklung zu beobachten. Das heisst mit anderen Worten, es wird versucht, möglichst ohne Leistungseinbusse, die Bearbeitungsverfahren derart auszugestalten, dass durch sich unterscheidende Bearbeitung der Produkte sich voneinander unterscheidende Endprodukte herstellbar werden. Dies wird vor allem dadurch realisiert, dass die Produkte auf einem im wesentlichen gleichbleibenden Pfad durch eine Mehrzahl von Bearbeitungsschritten geführt werden, wobei sie wahlweise bearbeitet oder nicht bearbeitet werden.

Es zeigt sich nun, dass diese Entwicklung im Rahmen des Bekannten aber an Grenzen stösst. Einerseits wird es notwendig, immer mehr Zwischenprodukte in immer kleineren Gruppen zur Zwischenlagerung aus dem im wesentlichen kontinuierlichen Verfahren auszuschleusen, wozu diese Gruppen in Lagerformationen gewandelt, zwischengelagert und wieder in Produkteströme gewandelt werden müssen. Dadurch erhält die Verfahrensverwaltung, die die zwischengelagerten Gruppen wieder richtig in das kontinuierliche Verfahren einschleusen muss, eine sehr hohe Komplexität.

Andererseits wird durch die genannte Entwicklung zur Flexibilisierung die Auswirkung von Fehlern, durch die unbrauchbare Produkte entstehen, derart gravierend, dass Vorkehrungen getroffen werden müssen, um derartige Fehler um jeden Preis zu verhindern, Vorkehrungen, die sehr aufwendig sein können.

Unter erhöhter Komplexität wird also die Verfeinerung der Unterteilung bspw. im Sinne einer bis ins Extreme getriebene Personalisierung der Print-Weiterverarbeitung verstanden werden. Die Erhöhung der Komplexität erfordert in der Regel zusätzliche Verarbeitungs- bzw. Prozess-Schritte. Hier kommt es nun drauf an, wie diese zusätzlichen Verarbeitungsschritte organisiert und durchgeführt werden. Unter Freiheitsgrad wird die operative Möglichkeit, in jeder Verfahrensphase die Komplexität zu ändern, verstanden, das heisst, dass sie zu jeder Zeit, auch mitten im Verarbeitungsprozess, beliebig höher oder tiefer gestuft werden kann. Die heutzutage mehr und mehr gewünschte Aufteilung der Printmedien in immer mehr verschiedene Sachgebiete (was zu kleinen bis Kleinst-Auflagen führt) und die ständig vermehrt angestrebte Personalisierung der Produkte (ganz entgegen jegliche Aufwand einsparende Bestrebung zur Vereinheitlichung) und dies erst noch bei eher sinkenden als steigenden Endverkaufspreisen, verlangt dringend nach neuen, hohe Flexibilität bietende Verarbeitungsmethoden.

Zwei Beispiele zur Erhöhung der Flexibilität von an sich bekannten Bearbeitungsverfahren für Erzeugnisse von Druckmaschinen sind beschrieben in den Publikationen EP-511159 (bzw. US-5280895) und DE-19524912, die sich beide mit der Lösung des Problems befassen, aus verschiedenen Teilprodukten eine vorgegebene Sequenz verschiedener Endprodukte zu erstellen durch gesteuerte Variation der Teilprodukte-Kombinationen.

Beide Verfahren gemäss den oben genannten Publikationen bedienen sich bekannter Bearbeitungsstationen und bekannter Mittel zur Förderung von Produkteströmen zu den Bearbeitungsstationen und davon weg, insbesondere Förderketten, an denen Greifer angeordnet sind, die je ein Druckprodukt ergreifen, fördern und deponieren.

Beide Publikationen zeigen aber auch deutlich, wie komplex die Lösungen einer an sich noch einfachen Problemstellung sind und insbesondere, wie hoch der für die Fehlervermeidung notwendige Aufwand ist. Beide Publikationen zeigen dadurch auch, dass für die Lösung noch komplexerer Problemstellungen das Auffinden neuer Lösungswege absolut notwendig ist.

Die Erfindung stellt sich aus diesem Grunde die Aufgabe, ein Bearbeitungsverfahren zur Bearbeitung von Stückgut aufzuzeigen, mit dem die genannten Grenzen von bekannten derartigen Verfahren überschritten werden können, mit dem also auch für ein Bearbeitungsverfahren mit einer hohen Komplexität (hohe Zahl von Bearbeitungsschritten, die in unterschiedlicher Art auf Gegenstände wirken) eine bedeutend höhere Flexibilität (Anpassung an zeitlich relativ schnell aufeinanderfolgende Änderungen) möglich wird, ohne dass einerseits der Aufwand ins Unakzeptable steigt und ohne dass andererseits für die unbedingte Verhinderung von Fehlern weiterer, hoher Aufwand in Kauf genommen werden muss.

Ferner ist es die Aufgabe der Erfindung, für die Steuerung des Bearbeitungsverfahrens ein Steuerverfahren aufzuzeigen und für die Durchführung des Bearbeitungsverfahrens eine entsprechende Einrichtung zu schaffen.

Diese Aufgabe wird gelöst durch Bearbeitungsverfahren, Steuerverfahren und Einrichtung, wie sie in den Patentansprüchen definiert sind.

Die Grundidee der Erfindung beruht darauf, die starren Produktesequenzen in den Produkteströmen, wie sie aus heutigen Verfahren bekannt sind, zu durchbrechen, das heisst die Aufeinanderfolge oder Sequenz von Produkten (oder Produktegruppen) in Produkteströmen, die Bearbeitungsstationen zugeführt oder von solchen weggeführt werden, durch Stationen zur Sequenzwandlung zu führen und dadurch veränderbar zu machen. Die Sequenzwandlungen werden dabei gemäss einer vorgegebenen, zu erstellenden Sequenz (das heisst also gemäss Zuständen, die stromabwärts zu erstellen oder vohanden sind) und/oder gemäss mindestens einer Eigenschaft der Produkte des zu wandelnden Stromes (das heisst also gemäss Zuständen, die stromaufwärts vorhanden sind) gesteuert. Auch die Bearbeitungsstationen sind mindestens teilweise steuerbar gemäss einer vorgegebenen, zu erzeugenden Produktesequenz und/oder gemäss mindestens einer Eigenschaft der der Bearbeitungsstation zugeführten Produkte.

Ferner werden die den Bearbeitungsprozess durchlaufenden Gegenstände nicht mehr durch eine Zeitanbindung (vollständiges, die Verarbeitungsordnung aufrecht erhaltendes Durchtakten des Arbeitsprozesses) oder durch ihre Sequenzpositionen gesteuert, sondern wird die Bearbeitung erfindungsgemäss durch die jeweilig auftretenden Kontexte bestimmt, in welchen sich ein einzelner Gegenstand (Druckprodukt) oder eine Vielzahl von solchen gerade befindet (kontextorientierte Verarbeitung).

Der jeweilige Kontext, das ist die funktionelle Verarbeitungsumgebung, in dem sich ein Gegenstand befindet, umfasst einen Teil der gesamten Vernetztheit eines Verarbeitungsprozesses. Unter dieser Vernetztheit sollen alle Teilprozesse, operative und inoperative, verstanden werden, die zum Ablauf des Prozesses beitragen oder beitragen können. Operative Teilprozesse umfassen bspw. Transportstrecken von einer Berarbeitungsstelle zur anderen und die Berarbeitungsstellen selber natürlich auch; inoperative Teilprozesse umfassen bspw. Pufferstrecken oder Rückführschlaufen (in welchen sich die Druckprodukte wohl bewegen), in denen aber keine Bearbeitung, auch kein (aktiver) Transport zu einer solchen oder zwischen solchen stattfindet. Wenn sich auch die Begriffe zu einem Arbeitsablauf manchmal überschneiden können, bpsw. ein Fördern zu einer Verarbeitungsstelle oder ein Fördern innerhalb einer Rückführschlaufe, sind sie funktionell doch streng getrennt, schon deswegen, weil sie sich in verschiedenen Kontexten befinden.

Die Gegenstände oder Objekte, z.B. Druckprodukte, können entweder als Einzelindividuen oder als Kollektiv, also als Schar (Cluster) vorliegen. Eine wichtige Voraussetzung ist jedoch, dass das maximale Erkennungs- oder Kontrollpotential stets den einzelnen Gegenstand erfasst, obwohl eine Schar, das ist eine Zusammenfassung von mehr als einem Gegenstand, auch als Objekt, gleich wie eine einzelne Druckschrift behandelt wird. Solche Kollektive sind immer eine Gruppe von einzelnen Gegenständen, beispielsweise also Gruppen von einzelnen Druckschriften.

Die Einrichtung zur Durchführung des Verfahrens umfasst Bearbeitungsstationen (mindestens eine) die mittels Förderstrecken und Sequenzwandelstationen (mindestens eine) netzartig miteinander verbunden sind.

Unter Produktestrom ist im Rahmen des vorliegenden Textes eine Reihe von Produkten oder Produktegruppen zu verstehen, in welcher Reihe die Produkteabstände regelmässig sind (getakteter Strom) oder unregelmässig (nicht getakteter Strom) und wobei die Produkte mindestens zeitweise alle miteinander oder individuell in einer Richtung der Reihe gefördert werden, zeitweise aber auch stillstehen können.

Unter Sequenz wird im Rahmen dieser Beschreibung die Reihenfolge von Produkten oder Produktegruppen in einem Produktestrom verstanden. Diese Sequenz ist in einem Strom identischer Produkte irrelevant, da die Produkte beliebig austauschbar sind. Die Produktesequenz in einem Produktestrom spielt aber dann eine wichtige Rolle, wenn die Produkte sich in einer oder mehreren Eigenschaften voneinander unterscheiden und diese Eigenschaften für die Weiterbearbeitung relevant sind. Die zu betrachtenden Sequenzen können insbesondere unregelmässig sein, das heisst keine zyklisch sich repetierendes Muster aufweisen, was aber keine Bedingung ist. In einer Sequenz können wiederholt identische Produkte auftreten, was aber ebenfalls keine Bedingung ist. Die Sequenzen können grössere oder kleinere Scharen von aufeinanderfolgenden, identischen Produkten aufweisen, wobei derartige Scharen aber im Vergleich zur ganzen Zahl von durch die Bearbeitung laufenden Gegenständen insbesondere relativ klein ist.

Durch eine Sequenzwandlung verändert sich die Reihenfolge von Produkten oder Produktegruppen im Strom. Dabei ist zu beachten, dass das Entfernen eines Produktes aus einem getakteten Stom mit Erzeugung einer Lücke nicht als Sequenzwandel anzusehen ist, sondern als Veränderung der Eigenschaften der spezifischen Sequenzposition von einem Produkt mit bestimmten Eigenschaften zu einem "Produkt mit Null-Eigenschaften". Dasselbe gilt für das Einschleusen eines Produktes in eine Lücke eines getakteten Stromes. Demgegenüber ist das Schliessen einer Lücke in einem getakteten Strom als Ausschleusung einer Sequenzposition und damit als Sequenzwandlung anzusehen, die zwei Produkte, die vorher nicht Nachbarn waren (durch Lücke getrennt) neu zu Nachbarn macht.

Durch den Einbezug von Stationen zur Sequenzwandlung, wie sie in den vorgehenden Abschnitten skizzenhaft beschrieben sind, wird eine mit den bekannten Verfahren, die im wesentlichen auf Sequenz-invarianten Produkteströmen oder höchstens mit taktmässig gesteuerten (zyklischen) Sequenzänderungen basieren, nicht denkbare Komplexität und Flexibilität möglich, da die Bearbeitungspfade der Produkte sich fast beliebig zu einem sehr hohen Komplexitätsgrad vernetzen lassen. Im Gegenzug ist aber eine Unterordnung des Verfahrens unter einen einzigen Systemtakt, der in bekannten Verfahren ein wichtiges Steuermittel darstellt, nicht mehr möglich, sodass auch bezüglich Steuerung des Verfahrens neue Wege beschritten werden müssen. Dabei sind nach wie vor bereichsweise Taktregime insbesondere für Bearbeitungsschritte vorteilhaft, wobei diese Taktregime neu aber völlig voneinander entkoppelbar sind, ohne dass dazwischen Zwischenlagerungen von Lagerformationen unumgänglich sind.

Zu Beginn, bei der Initialisierung des Prozesses, wird eine Art Bestandesaufnahme von zu bearbeitenden Gegenständen und von den Bearbeitungsschritten, die auf die Gegenstände einwirken sollen, vorgenommen. Die Gegenstände sind in der Regel physisch greifbar, also gegenständlich, es sind bspw. Teilprodukte einer Zeitung, Einsteckprodukte und Zutaten aller Gattung, die schliesslich, zu Ende verarbeitet, in Form von greifbaren Fertigprodukten aus dem Prozess ausgeschleust werden sollen (sie werden auf Produktpfaden verarbeitet). Die Vielzahl der nötigen Bearbeitungsschritte sind in ihrer Zuordnungsform nicht physisch greifbar, sie liegen als Daten oder Datensätze vor (und werden auf Datenpfaden verarbeitet). Die Zuordnung von Druckschriften und Bearbeitungsdaten geschieht innerhalb der entsprechenden Kontextfelder durch den Verarbeitungsprozess (sie werden auf Prozesspfaden verarbeitet). Bei der Bestandesaufnahme oder Initialisierung werden Bearbeitungsschritte und Gegenstände erfasst (was am Anfang zu vielen Daten führt), doch innerhalb des Verarbeitungsprozesses müssen nur noch Aenderungen und Bearbeitungs-Anforderungen gemäss den Kontexten berücksichtig werden (was im Verhältnis eher wenig Daten erfordert und daher schnell und flexibel ist). Dabei findet eine ständige, wechselweise Synchronisierung und Desynchronisierung, ein Aufgeben und Wiederaufnehmen von Zeit- oder Adressabhängigkeit statt. In desynchronisierten Passivphasen sind die Gegenstände immer noch innerhalb des Verarbeitungsprozesses, aber zeitfrei (adressgebunden) und stehen jederzeit zur Übernahme in das Zeitregime zur Verfügung. pas heisst aber nicht, dass sich in einer Passivphase nichts bewegt, es findet lediglich keine "Bearbeitung" statt. In synchronisierten Aktivphasen sind die Druckprodukte adressfrei, aber zeitgebunden.

Eine Aktivphase ist im wesentlichen eine Bearbeitungsphase, sie untersteht bspw. einer temporären Zeitgebundenheit und damit setzt für diesen Teil des Verarbeitungsprozesses (aktive Prozessphase) temporär, also zeitlich beschränkt, das bis heute bewährte Taktregime ein. Das Einschleusen in das Taktregime geschieht jedoch nur innerhalb eines genau bestimmten, vorgegebenen Kontexts, in welchem sich ein Druckprodukt oder eine Schar befindet (bspw. ein Teilprodukt befindet sich in einer Aktivphase, ein Einsteckprodukt in einer Passivphase und zusammen bilden sie mit der entsprechenden Datenzuordnung einen Kontext, der bspw. eine Weichenstellung im Transportsystem derart auslösen soll, dass Teilprodukt und Einsteckprodukt zu einem Einstecksystem geleitet werden. Im Folgekontext - also dem nächstfolgenden Kontext - befinden sich beide Produkte in der Aktivphase und der zugeordnete Datensatz gibt den Einsteckvorgang frei).

Dasselbe gilt auch für das Ausschleusen von Druckprodukten aus dem Taktregime in die zeitungebunde Adressordnung (Warteschlaufen, Puffer, Lager etc.). Die Auslösung eines Arbeitsschrittes innerhalb des Verarbeitungsprozesses wird durch den auf diesen Arbeitsschritt gerichteten Kontext ausgelöst und solange dieser nicht erfüllt ist, findet die Weiterverarbeitung (also dieser spezielle Arbeitsschritt) nicht statt. An dessen Stelle werden unmittelbar Massnahmen eingeleitet, um den gewünschten Kontext herzustellen. Dies war in früheren Verarbeitungsprozessen (straight forward) nie der Fall. Ferner erkennt man hier schon, dass der Aufwand zur Verarbeitung höherer Komplexität nicht überproportional wie bisher, sondern linear bis sogar subproportional zunimmt.

Der (Verarbeitungs-) Prozesskontext umfasst den Gesamtdatensatz aufgeteilt in aktive (= aktuelle) und passive (= nichtaktuelle) Datensätze und die zugeordneten Objekte, bzw. deren Identifikation über Zeit/Ort oder Adresse. Diese Daten werden vorgegebenen Kontexten zugewiesen und zugeordnet. Ein aktueller Datensatz und die zugeordneten Objekte befinden sich, prozessual gesehen, in irgendeiner Verarbeitungsform oder Verarbeitungsstufe innerhalb des Gesamtprozesses. Die Einwirkung einer Verarbeitung auf ein Objekt ist eine Aktivfunktion; die Passivfunktion ist demgemäss die Abwesenheit einer Verarbeitung. Dabei ist auch eine gezielte Dislokation (Entnahme/Zugabe) von Objekten oder Individuen aus ihrer aktuellen Schar (bspw. Aktivschar) vorgesehen, um sie beispielsweise, ebenso gezielt, in eine andere Schar (bspw. Passivschar) zu überführen. Eine solcher Uebergang von aktiv-zu-passiv entspricht einem Ausschleusen aus der Zeitgebundenheit in die Adressgebundenheit (desynchronisieren der einzelnen Druckprodukte) und der Uebergang von passiv-zu-aktiv führt wieder zurück in die Zeitgebundenheit (synchronisieren der einzelnen Druckprodukte).

Auf diese Weise lässt sich jeder gewünschte Grad von Komplexität herstellen und kontrollieren. Damit kann aber umgekehrt auch jeder vorhandene Grad von Komplexität unter die Prozesskontrolle gebracht werden. Die Druckprodukte können einzeln oder in beliebig grossen Scharen eingeteilt oder erfasst werden, sie können aus der Verarbeitung entnommen, adressiert und passiv gemacht werden (für weitere Verarbeitungsgänge) und wieder aktiviert, also in die Verarbeitung wieder eingeschleust werden, aber auch ganz gezielt zu einem bestimmten Aktivobjekt zugeordnet werden. Dies geschieht alles unter dem Regime einer gemeinsamen kontextorientierten Prozesskontroüe, die sich an einer Vielzahl von vorbestimmten Kontexten (und Kontextfeldern) ausrichtet. Die Zeit- oder die Adressanbindung dient als Mittel zum Ein- und Ausschleusen aus Aktivfunktionen, wie Verarbeitungen ganz allgemein, in Passivfunktionen, wie Warteschlangen, Pufferungen, Lagerungen etc. und wieder zurück mittels Einschleusen in weitere aktive Prozessphasen. Dabei ist stets aber immer auch das Einzelprodukt, ein Teilprodukt, ein Einsteckprodukt als solches unter Kontrolle. Dislokationen eines einzelnen Produktes p aus einer Gruppe Gx in eine andere Gruppe Gy werden dadurch erfasst, dass bspw. die Veränderung in Form von neuen Gruppen Gx- = (Gx minus p) und Gy+ = (Gy plus p) angezeigt wird, wobei dies dann ein permanenter oder auch ein transitorischer Zustand sein kann. Die Erfassung solch einer Auffächerung an Daten und Datensätzen ist mit den heutigen Computermitteln kein Problem mehr.

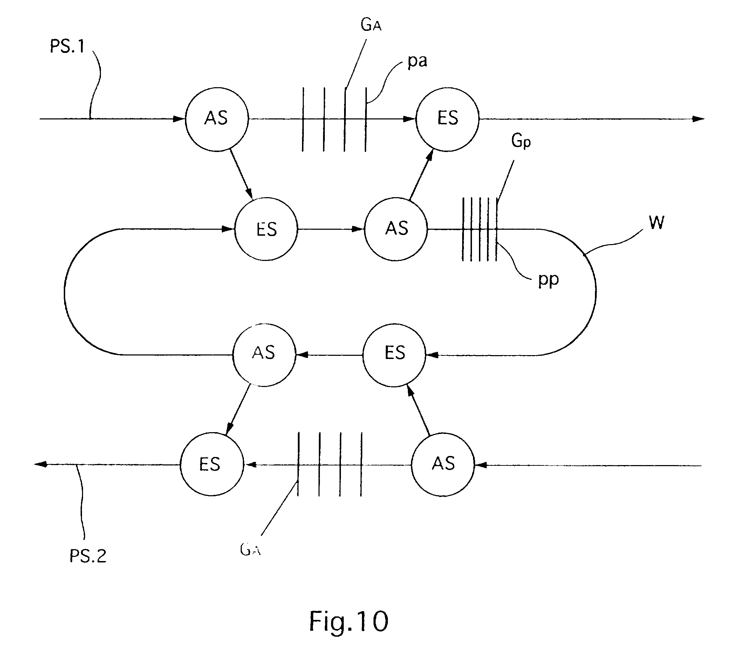

Innerhalb des Verarbeitungsprozesses können interessante Kontexte auftreten. Zum Beispiel: eine aus der zeitgebundenen Aktivphase ausgeschleuste, unter dem Adress-Regime stehende Produktegruppe Gp (Passivschar) bewegt sich in einer Warteschlange, um mit einer zugeordneten, in Bearbeitung (Transportbewegung), also im Zeit-Regime stehenden Produktegruppe Ga (Aktivschar) zusammengeführt zu werden (siehe Figur 10). Obschon die Produkte beider Scharen in Bewegung sind, vielleicht sogar mit gleicher Geschwindigkeit bewegt werden, unterscheiden sie sich durch den jeweiligen Kontext, dem sie zugeordnet sind, was von blossem Auge natürlich nicht eruierbar ist.

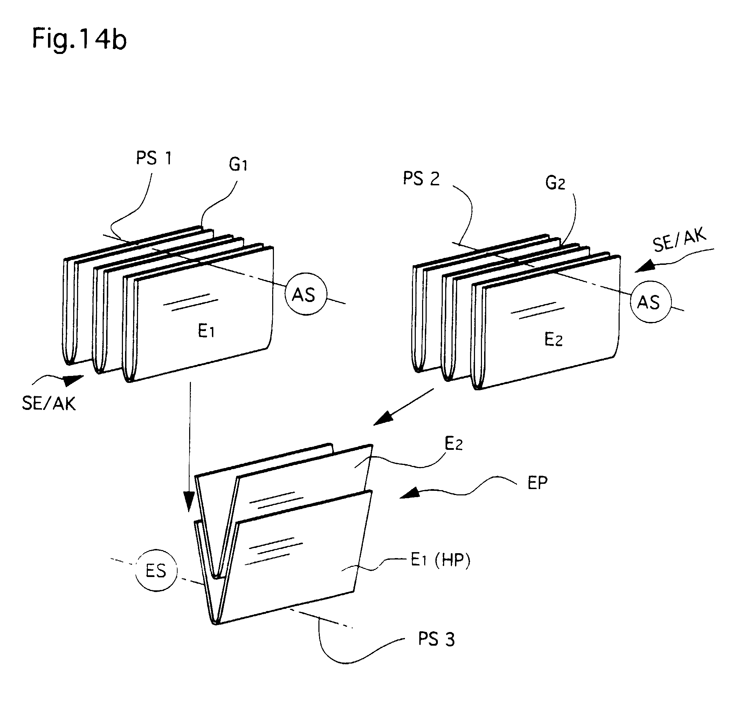

Eine Bearbeitung kann beispielsweise darin bestehen, die Gruppe Gp der Gruppe Ga zuzuordnen, wobei Gp in Ga übergeht, dadurch, dass jedes passive Produktelement der Gruppe Gp einem aktiven Produktelement der Gruppe Ga zugeordnet wird, bspw. Vereinigen von Teilprodukten, Einstecken von adressierten Einsteckprodukten, Anbringen von Adressen und so weiter (zur Illustration siehe auch Figur 14b).

Zur Durchführung des erfindungsgemässen Bearbeitungsverfahrens sind Transportmittel für die Förderung der Produkte und Führungsmittel zur Führung der Produkte bei der Bearbeitung wie in den bekannten Verfahren unerlässlich, Bereits in bekannten Verfahren zeigt es sich, dass es vorteilhaft ist, die Transportmittel auch als Führungsmittel auszugestalten, sodass Bearbeitungen während der kontinuierlichen Förderung möglich werden und zwar insbesondere auch, ohne dass dazu die Produkte von einem Transport- oder Führungsmittel an ein anderes derartiges Mittel übergeben werden müssten. Um Übergaben zu vermeiden werden zwar kombinierte Transport/Führungsmittel notwendig, mit denen jedes Produkt einzeln führbar wird (z.B. Greiferketten im Gegensatz zu Förderbändern); es zeigt sich aber, dass die Verfahren trotzdem ökonomischer werden.

Sollen nun auch im erfindungsgemässen Verfahren Übergaben vermieden werden, bedeutet dies, dass anstelle von Transportmitteln mit einzelnen, Produkten zuzuordnenden Führungsmitteln vorteilhafterweise voneinander unabhängige, einzelnen Produkten oder Produktegruppen zuzuordnende Transportorgane angewendet werden, die gleichzeitig auch als Führungsmittel dienen können oder entsprechend auszugestalten sind, denn nur mit derartigen Transportorganen können auch Sequenzwandlungen ohne Übergabe der Gegenstände durchgeführt werden. Übergaben von einem Transportmittel an ein anderes sind aber weiterhin da notwendig, wo Produkte durch die Bearbeitung derart verändert werden, dass sie nicht mehr von denselben Transportorganen transportierbar sind, und da, wo Verarbeitungsstationen mit eigenen Führungs- bzw. Transportorganen eingesetzt werden sollen. Ebenfalls sind Übernahmen bzw. Abgaben da notwendig wo Produkteströme beispielsweise aus Lagerformationen erstellt werden oder da, wo aus Produkteströmen beispielsweise Lagereinheiten oder Versandeinheiten erstellt werden.

Das erfindungsgemässe Bearbeitungsverfahren, das Steuerverfahren zur Steuerung des Bearbeitungsverfahrens und die Einrichtung zur Durchführung des Bearbeitungsverfahrens werden anhand der folgenden Figuren mehr im Detail beschrieben. Dabei zeigen:
- **Figur 1**: ein Feld von Steuerkontexten mit beispielhaften Prozesspfaden;
- **Figur 2**: ein dreidimensionales Kontextfeld für komplexere Prozesse;
- **Figur 3**: einen 2-dimensionalen Array von Kontextzusammenhängen
- **Figuren 4 bis 8**: verschiedene, beispielhafte Varianten von Stationen zur Sequenzwandlung;
- **Figur 9**: die Sequenzwandlung gemäss Figur 8, dargestellt als Kombination von Einschleusungen und Ausschleusungen;
- **Figur 10**: ein weiteres Beispiel einer Kombination von Einschleusungen und Ausschleusungen;
- **Figuren 11 bis 13 und 14 a/b**: verschiedene, beispielhafte Varianten von Bearbeitungsschritten;
- **Figur 15**: ein Verfahrensschema für eine beispielhafte Variante des erfindungsgemässen Bearbeitungsverfahrens;
- **Figur 16**: ein Schema zur Illustration des Aufbaus eines Kontext-orientierten Steuerverfahrens;
- **Figur 17**: ein Schema zur Illustration der Interaktion zwischen Kontextfeld in der virtuellen Ebene und Bearbeitungsprozess auf der reellen Ebene.

Kontexte sind vorbestimmte Zustände innerhalb eines Gesamtprozesses und umfassen beispielsweise drei Elemente: eine Zuordnungsvorschrift (Aktion) und die involvierten mindestens zwei Zuordnungselemente (Produkte, die einander zugeordnet werden sollen). Kontexte können mehrere Zuordnungen und eine Mehrzahl von Zuordnungselementen enthalten, sie können auch nur ein einziges Element (zwei gleiche Elemente auf sich abgebildet) und eine Zuordnungsvorschrift aufweisen, bspw. Falten eines Teilproduktes als Zuordnungsvorschrift und das Teilprodukt als Zuordnungselement (Kontext: Teilprodukt und Faltvorschrift löst den Vorgang Falten aus). Letzteres ist an sich trivial, soll jedoch zeigen, dass in einem kontextorientierten Prozess alle Bearbeitungsaufgaben und nicht nur die komplexen Zusammenhänge enthalten sind.

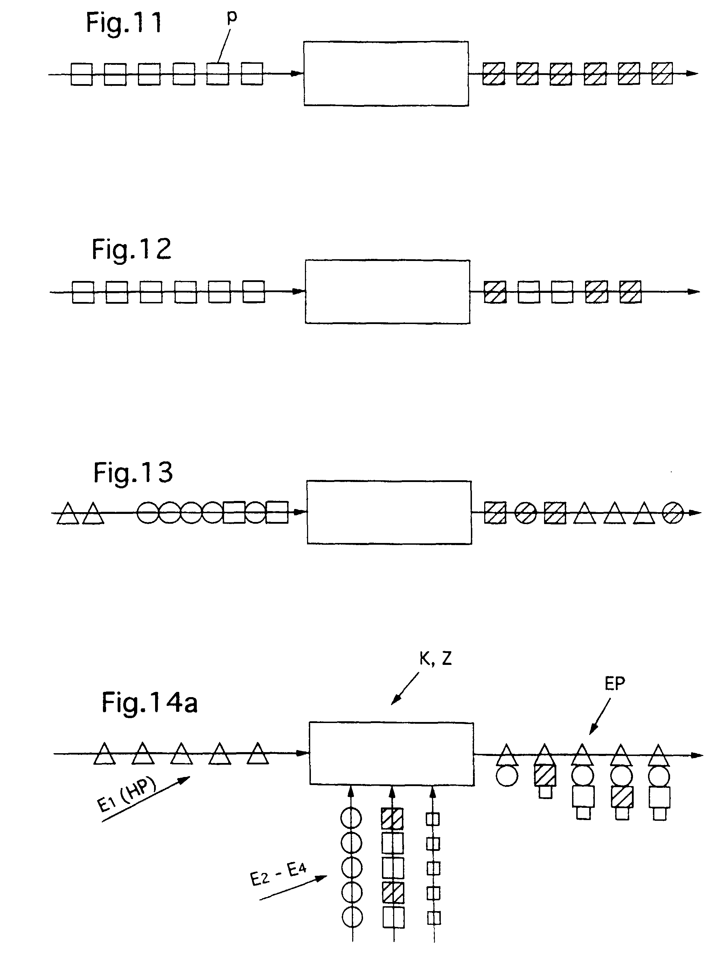

Ein Beispiel (zur Illustration siehe Figur 14a) für einen Elementarkontext mit einer Zuordnungsvorschrift Z1 udn zwei involvierten Zuordnungselementen E1 und E2 ist der folgende: Z1 = Öffnen und Einstecken, E1 = Hauptprodukt (ein Teilprodukt), E2 = Einsteckprodukt (ein anderes Teilprodukt). Wenn der Kontext {E1,E2,Z1} tatsächlich vorliegt (wenn der aktuelle Kontext mit dem vorbestimmten oder bedingten Kontext übereinstimmt), führt dies zur Aktion (A) Öffnen des Hauptproduktes E1 und Einstecken des Teilproduktes E2 ({E1,E2,Z1} -> A). Ein aktueller Kontext {E1,E3,Z1} führt nicht zur Aktion A, weil der aktuelle Kontext mit dem vorbestimmten Kontext nicht übereinstimmt (E3 ist falsches Produkt). Der vorbestimmte oder bedingte Kontext {E1,E2,Z1} ist in der Kontextbibliothek im Computer vorgegeben. Auf der axiomatischen Ebene mag dies ziemlich trivial aussehen, doch sobald komplexere Kontexte zur Anwendung kommen, ändert sich dies schnell, ohne jedoch prozessmässig 'komplizierter' zu werden. Diese einfache Vorschrift gilt für jeden irgendwie zusammengesetzten Kontext.

Die aktuellen Kontexte und deren Kombinationen müssen natürlich erkennbar sein und erfasst werden können (bspw. über Sensoren SE), um eine bestimmte Aktion (bspw. über Aktoren AK) auszuführen. Dazu werden alle nötigen Kontextelemente in einer Bibliothek (der Kontextelementbibliothek) bereitgehalten und die zugehörigen Verknüpfungsvorschriften als Prozessdatensätze ebenfalls in einer Bibliothek (der Linkbibliothek) zum Abruf bereitgehalten. Daten aus der Kontextelemente- und aus der Linkbibliothek bilden zusammen den (virtuellen) Umfang der Kontexte, welche ihrerseits wie Macros in einer weiteren Bibliothek (Kontextbibliothek) abgelegt werden. Die Kontextbibliothek ist die Sammel- und Aufnahmestelle für alle denkbaren Verfahrensschritte.

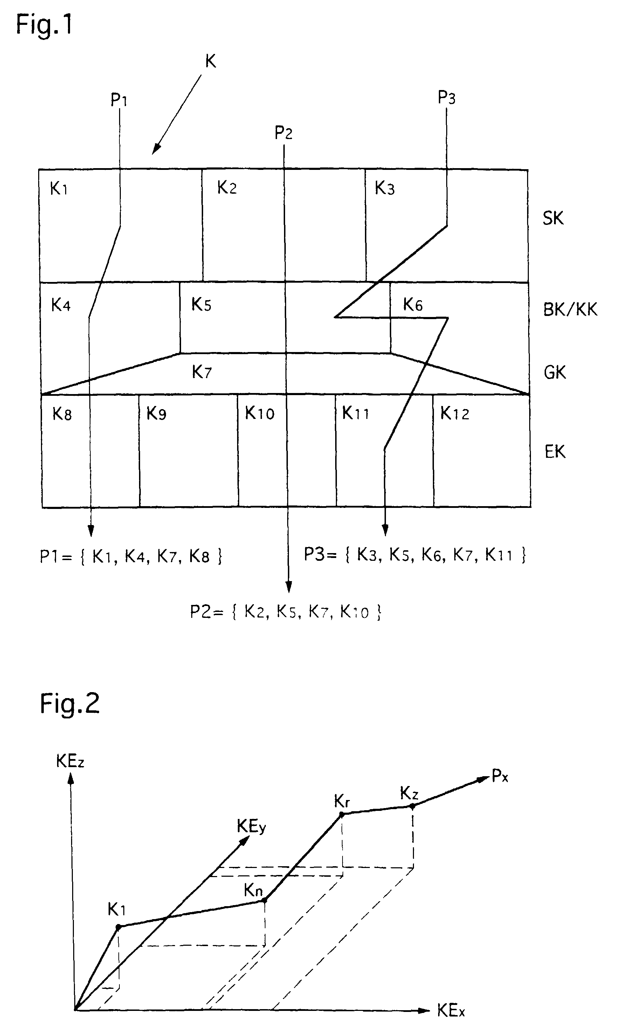

**Figur 1** zeigt eine völlig frei gewählte Anordnung (Kontextfeld) von 12 Steuerkontexten, aufgeteilt in Startkontexte SK, Bearbeitungskontexte BK, Generalkontexte GK und Endkontexte EK, die von drei Teilprozessen eines Gesamtprozesses auf im wesentlichen parallelen Prozesspfaden P1, P2, P3 durchlaufen werden. Es können natürlich beliebig viele Teilprozesse und Verzweigungen solcher vorkommen. Ebenso erkennt man, dass nicht alle Kontextfelder benützt werden (z.B. Kontexte für Fehler, die nicht vorkommen); die Kontexte K9 und K12 sind bspw. unbenützt. Ferner erkennt man einen Kontext K7, durch den alle Prozesspfade hindurchlaufen, solche generelle Kontexte können nebst Bearbeitungskontexten auch Kontrollkontexte KK sein. Der Prozess P1 durchläuft die Kontexte K1, K4, K7 und K8 in denen Bearbeitungs- oder Transportschritte ausgelöst werden, das heisst mit andern Worten, vier Mal muss auf diesem Prozesspfad der jeweilige Kontext stimmen, damit die zugehörige Aktion ausgelöst wird, ein neuer Kontext geschaffen und dadurch der Prozess in einen weiteren Steuerkontext K weiterbewegt wird.

Ebensoviele, aber andere Steuerkontexte K durchläuft der Prozess P2, nämlich K2, K5, K7 und K10. Hier unterscheiden sich Startkontext, Bearbeitungskontext und Endkontext. Der auf dem Prozesspfad P2 ablaufende Teilprozess kann bspw. vom auf dem Prozesspfad P1 ablaufenden Teilprozess zeitlich entkoppelt sein oder bspw. im Steuerkonzept K7 zeitlich zusammentreffen. Ob das eine oder andere geschieht, hängt von den Inhalten der jeweiligen Steuerkontexte ab.

Der auf dem Prozesspfad P3 ablaufende Teilprozess weist gegenüber den anderen beiden einen Verarbeitungsschritt mehr auf. Er durchläuft die Steuerkontexte K3, K5, K6, K7, K11. Mit dem Prozesspfad P2 hat er die Steuerkontexte K5 und K7 gemeinsam, jedoch dazwischen noch einen Steuerkontext K6, der z.B eine Zusatzbearbeitung (bspw. Aufdrucken einer Adresse) ausgelöst. Solch eine Zusatzbearbeitung schliesst einen synchronen Ablauf auf diesem Pfad mit dem Ablauf auf den anderen Pfaden jedoch nicht aus. Beispielsweise kann Kontext K4 eine Einschleusung in eine Warteschlaufe auslösen, und der bedingte Kontext von K7 eine zeitliche Synchronisation mit den auf den anderen Prozesspfaden ablaufenden Teilprozessen beinhalten, durch den eine Wiedereinschleusung in den Bearbeitungsprozess ausgelöst wird.

**Figur 2** zeigt die graphische Darstellung eines 3-dimensionalen Prozessfeldes mit den Kontextachsen KEx, KEy und KEz, was sich noch einfach darstellen lässt. Die nächsten Schritte zu einem multidimensionalen Prozessfeld, wie es in der Praxis dann vorkommt, kann zeichnerisch nicht mehr verständlich dargestellt werden. Für den Computer ist es jedoch kein Problem, aus einer grossen Menge von möglichen Steuerkontexten den oder die zugehörigen Prozesspfade, samt Fehlerkontexten, mit sämtlichen Verzweigungen darzustellen. Die Prozesse innerhalb eines gegebenen Verfahrens bzw. Einrichtung werden ähnlich programmiert wie ein Computerprogramm und sie steuern den Prozessablauf via Freigabe, Modusänderung oder Sperrung Prozessschritten (Bearbeitungsschritte, Transportschritte, Sequenzwandlungen). Über dem reellen Bearbeitungsprozess läuft das virtuelle Modell des Prozesses gleichsam mit ab, generiert Steuerimpulse für den reellen Prozess und nimmt durch den reellen Prozess generierte Sensorimpulse auf.

Bei der Anwendung des Kontext-orientierten Steuerungsverfahrens sind aktuelle Kontexte zu erfassen, damit sie mit den bedingten Kontexten verglichen und eine Übereinstimmung verifiziert werden kann. Die Erfassung aktueller Kontexte ist einerseits über Sensoren SE möglich (Erfassung auf der reellen Ebene), wobei auch Fehler auf der reellen Ebene erfassbar sind, oder retrospektiv über aktualisierte Daten (Erfassung auf der virtuellen Ebene) z.B. durch Ablesen von Zählerständen (für Sequenz-gesteuerte Aktionen) oder durch Registrierung der vorgängigen relevanten Veränderungen (für Eigenschaft-gesteuerte Vorgänge), wobei Fehler auf der reellen Ebene nicht mit einbezogen werden können. Die Menge von Sensoren, die zur Erfassung von Eigenschaften einzurichten sind, wird vorteilhafterweise auf die Wahrscheinlichkeit und Relevanz von erwarteten Fehlern ausgerichtet, derart, dass zwischen Aufwand und Risiko ein Optimum erreicht wird.

Bei Übereinstimmung von aktuellem Kontext und bedingtem Kontext wird beispielsweise die Erzeugung eines Steuerbefehles für einen Aktor AK ausgelöst (Aktion auf der reellen Ebene) und/oder es werden Daten aktualisiert (Aktion auf der virtuellen Eben), wie beispielsweise Zählerstände, gespeicherte Eigenschaften, vorgegebenen Sequenzen etc.

Die Eigenschaften von bei der Bearbeitung auftretenden Produkten (Ausgangsprodukte, Zwischenprodukte und Endprodukte) oder Produktegruppen (Scharen von hintereinander geförderten, z.B. identischen Produkten, Gruppen von parallel zu bearbeitenden Produkten, Lagereinheiten, Versandeinheiten etc.) sind vorteilhafterweise mindestens bereichsweise auf der reellen Ebene erfassbar, wobei es nicht relevant ist, ob dies während einem Bearbeitungsschritt, während der Förderung zu einem Bearbeitungsschritt oder davon weg oder während einer passiven Phase (Warteschlaufe, Zwischenlagerung etc.) geschieht. Zu diesem Zwecke sind entsprechende Sensoren SE vorzusehen. Die Eigenschaften können aber auch beispielsweise durch Datenaktualisierung (DA) erfasst werden, beispielsweise indem sie codiert z.B auf einem elektronischen Speicherorgan gespeichert (am Produkt oder am Transportorgan) mitgeführt werden, wobei dann entsprechende Lesegeräte für das Erfassen der Eigenschaften und Schreibgeräte zum Aktualisieren der Eigenschaften vorzusehen sind. Derartige Vorgänge laufen auf der reellen Ebene ab, sind aber eigentlich der virtuellen Ebene zuzurechnen genau, wie wenn entsprechende, mit einem Produkt oder einer Produktegruppe korrelierte Daten in einem zentralen Rechner gespeichert und dort aktualisiert werden. Ähnliche Funktionen können von auf den Produkten aufgedruckten Codes (z.B. Streifen- oder Farbcodes), die mit entsprechenden Lesegeräten gelesen werden, übernommen werden.

Derart codierte Eigenschaften von Produktegruppen können auch Eigenschaften der einzelnen in der Gruppe enthaltenen Produkte beinhalten, wenn diese sich voneinander unterscheiden. Ein Beispiel dazu ist eine wickelförmige Lagereinheit adressierter Teilprodukte mit der Eigenschaft, dass sie beispielsweise aus einer bekannten Adresssequenz a, b, c, d, e ... die Produkte c bis y in der vorgegebenen Reihenfolge enthält. Aus einer derartigen Lagereinheit ist ein Produkt mit einer bestimmten Eigenschaft (z.B. Adresse m) identifizierbar ohne reelle Erfassung der relevanten Eigenschaft sondern anhand der entsprechenden Sequenzposition durch Auszählen gemäss Abstand von der ersten Sequenzposition der Lagereinheit (Adresse c) bei first-in/first-out Betrieb oder durch Auszählen gemäss Abstand von der letzten Sequenzposition der Lagereinheit (Adresse y) bei first-in/last-out Betrieb.

Entsprechend wird vorteilhafterweise vorgegangen für Produkte auf Warteschlaufen oder in anderen Speichern, in denen die Produktesequenz konstant ist oder sich nur wenig ändert.

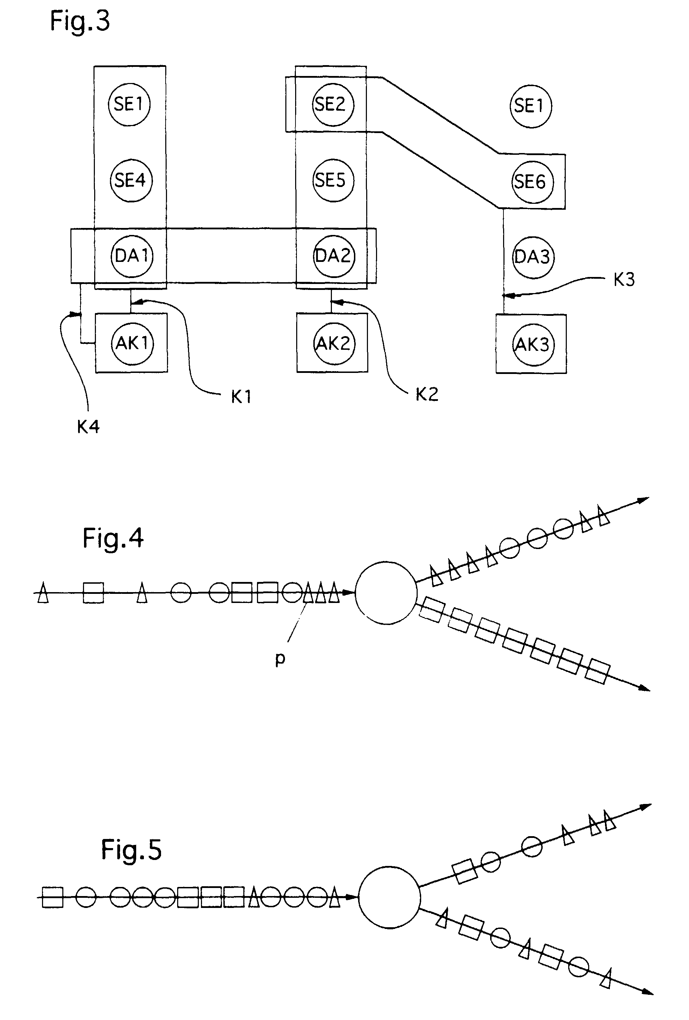

**Figur 3** zeigt illustrativ in einem 2-dimensionalen Array Sensoren SE1 bis SE6, Datenaktualisierungen DA1 bis DA3 und Aktoren AK1 bis AK3, die beispielsweise für eine Einrichtung zur Durchfürhung des erfindungsgemässen Verfahrens vorgesehen sind. Die Sensoren und die Datenaktualisierungen dienen der Erfassung von aktuellen Kontexelementen. Auf der virtuellen Ebene sind entsprechende bedingte Kontextelemente festzulegen. Die Aktoren dienen zur Ausführung der Aktionen. Je nach Bedingungen und/oder je nach Prozess, der momentan mit der Einrichtung durchgeführt wird, werden verschiedene Kontextelemente mit Aktionen zu Steuerkontexten K verknüpft. In der Figur 3 sind dies beispielsweise Steuerkontexte K1 (SE1/SE4/DA1 - A1), K2 (SE2/SE5/DA2 - A2), K3 (SE2/SE6 - AK3), K4 (DA1/DA2 - AK1) ...., oder allgemein: Kn (SEn bis SEm/ DAu bis DAv - AKs bis AKt).

Dabei werden nicht nur Sensoren und Aktoren des gleichen örtlich oder funktionlal begrenzten Bereichs miteinander verknüpft sondern insbesondere auch Sensoren mit davon stromaufwärts oder stromabwärts entfernten Aktoren und Datenaktualisierungen, die sich auf entfernte Prozessbereiche beziehen.

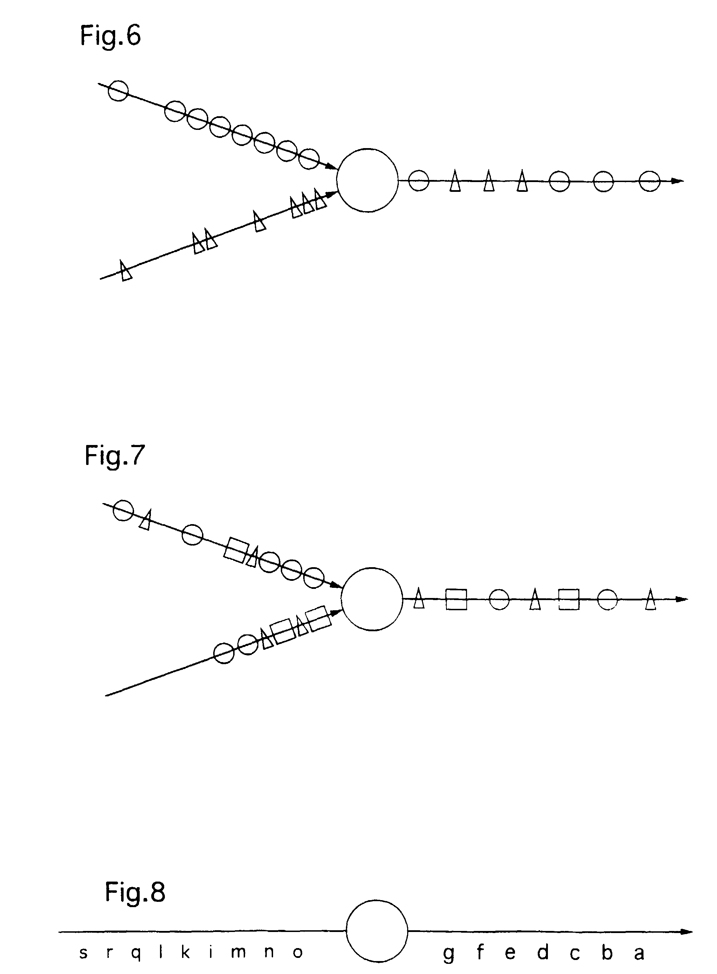

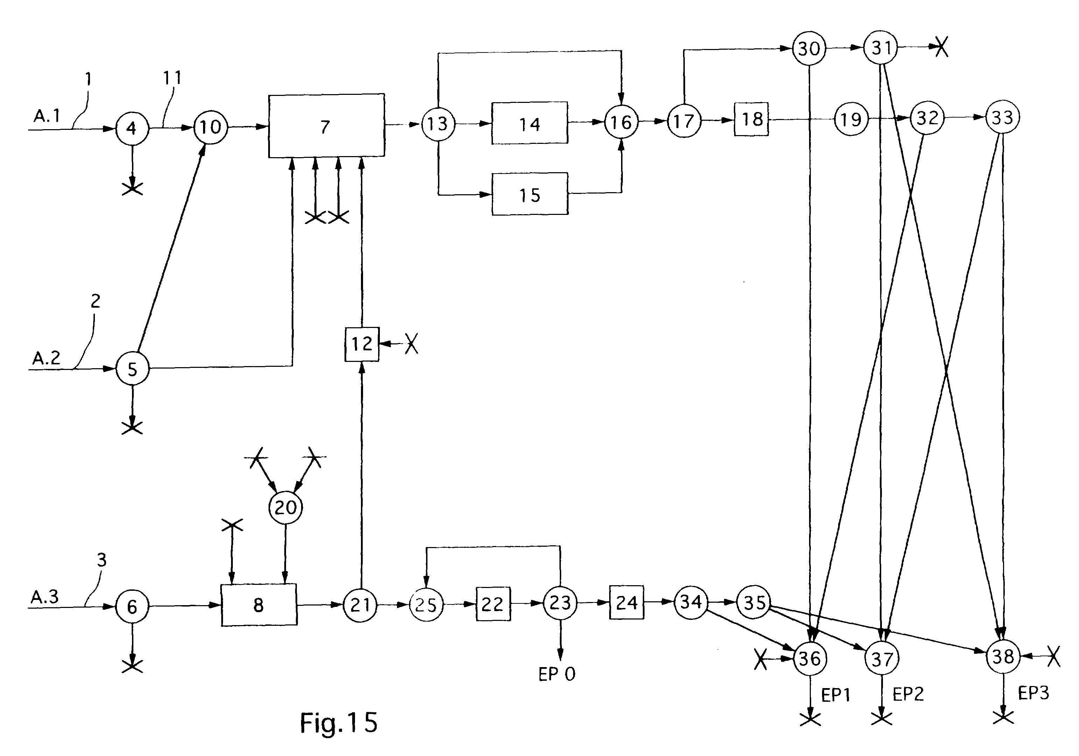

**Figuren 4 bis 8** zeigen beispielhafte Varianten von Sequenzwandlungen, wie sie im erfindungsgemässen Verfahren zur Anwendung kommen. Alle Sequenzwandlungen sind dargestellt als Kreise (Sequenzwandlungsstation), denen mindestens auf einem Pfad Produkte p zugefördert (Pfeil gegen Kreis) werden und von der auf mindestens einem Pfad Produkte weggefördert (Pfeil vom Kreis weg) werden. Beispielhafte Anwendungen der Sequenzwandlungen gemäss Figuren 4 bis 8 sind in der Figur 15 dargestellt.

**Figur 4** zeigt ein Ausschleusen von Produkten aus einem zugeführten Produktestrom, derart, dass zwei (oder auch mehr als zwei) Produkteströme entstehen. Im dargestellten Beispiel werden Produkte zugeführt, die sich in mindestens einer Eigenschaft voneinander unterscheiden (schematisch dargestellt als Kreise, Quadrate und Dreiecke) und die Steuerung der Sequenzwandlung ist derart, dass die Quadrate auf einen eigenen Pfad ausgeschleust werden (Eigenschaft-gesteuerte Ausschleusung). Zusätzlich ist die Sequenzwandlung derart gesteuert, dass die weggeförderten Produkte eingetaktet sind (mit gleichen Abständen gefördert werden). Dies setzt voraus, dass die zugeführten Produkte beispielsweise vor der Sequenzwandlung pufferbar sind (eingangsseitige Pufferung: dargestellt durch minimale Abstände der Produkte im Endbereich des Zuführungspfades). Für den Fall, dass Lücken in den getakteten Strömen möglichst verhindert werden sollen, ist die Pufferung ausgangsseitig (zwischen Ausschleusung und Eintaktung; nicht dargestellt) anzuordnen.

Die in der Figur 4 dargestellte Sequenzwandlung stellt also eine Eigenschaft-gesteuerte Ausschleusung mit Eintaktung und mit eingangs- und/oder ausgangsseitiger Pufferung dar, wobei unter Pufferung ein geordnetes Warten mit first-in/first-out Betrieb verstanden wird.

Ein Beispiel einer Variante der in der Figur 4 dargestellten Sequenzwandlung ist eine Eigenschaft-gesteuerte Ausschleusung ohne Eintaktung, die ohne Puffer realisierbar ist und der ein getakteter oder nicht getakteter Produktestrom zugeführt werden kann.

**Figur 5** zeigt als weiteres Beispiel einer Sequenzwandlung eine Eigenschaft- und Sequenz-gesteuerte Ausschleusung mit eingangsseitigem Puffer. Es werden verschiedene Produkte zugefördert und durch Ausschleusen von Produkten gemäss ihren Eigenschaften und gemäss einer aktuellen Sequenzposition (z.B. auf eine Warteschlaufe) wird eine vorgegebene Produktesequenz erstellt (hier als regelmässige Sequenz dargestellt) und beispielsweise als eingetakteter Strom weggeführt.

**Figur 6** zeigt als weiteres Beispiel einer Sequenzwandlung eine Sequenz-gesteuerte Einschleusung mit Eintaktung und eingangsseitiger Pufferung, durch die von zwei Zuführungsströmen zwei Arten von Produkten in einer vorgegebenen Sequenz und eingetaktet weggeförden werden.

**Figur 7** zeigt eine Eigenschaft- und Sequenz-gesteuerte Einschleusung mit Eintaktung und mit eingangsseitiger Pufferung, wobei in einen Zuführungsstrom aus einem zweiten Zuführungsstrom (z.B. Warteschlaufe) Produkte eingeschleust werden, um in diesem eine vorgegebene Sequenz mindestens anzunähern.

**Figur 8** zeigt eine Sequenzwandlung, durch die Sequenzveränderungen in einem Produktestrom vorgenommen werden. Dafür ist es notwendig, Wartepositionen bzw. Überholpfade zu schaffen, durch die einzelne Produkte ihren weiter stromaufwärts folgenden sequenzgerechten Platz im Strom bzw. ihren weiter stromabwärts liegenden, sequenzgerechten Platz im Strom erreichen können.

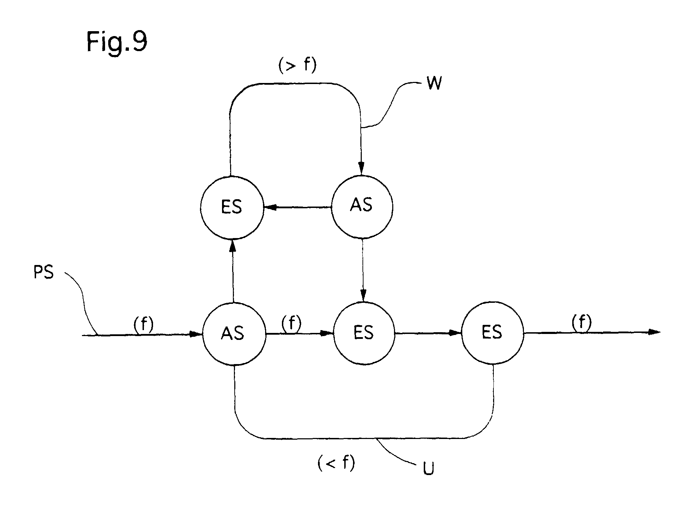

Eine Sequenzwandlung zur Sequenzveränderung in einem Produktestrom ist verfahrenstechnisch in der Art gemäss Figur 8 darstellbar. Vorrichtungstechnisch ist sie beispielsweise als Kombination von Einschleusungen ES und Ausschleusungen AS (gemäss oder vergleichbar mit den Ein- und Ausschleusungen gemäss Figuren 4 bis 7), die den Pfad des Produktestromes PS mit einer Warteschlaufe W und einem Überholpfad U verbinden, realisierbar, wie dies in der **Figur 9** dargestellt ist. Dabei sind alle Ein- und Ausschleusungen Eigenschaft- und Sequenz-gesteuert, das heisst Ein- und Ausschleusungen finden statt, wenn die relevante Eigenschaft des aktuellen Produktes mit der durch die aktuelle Sequenzposition gegebenen Eigenschaft übereinstimmt.

Die Sequenzwandlung gemäss Figur 8 und 9 wird beispielsweise angewendet, um eine vorgegebene Sequenz von Adressen (a, b, c, d ....) aus einer beliebigen oder insbesondere fehlerhaften Adresssequenz (o, n, m, i, k ...) zu erstellen.

Es ist offensichtlich, dass durch Kombination der in den Figuren 4 bis 8 dargestellten Sequenzwandlungen oder durch weitere Kombination einzelner Merkmale der dargestellten Sequenzwandlungen fast beliebige Sequenzwandlungen durchführbar sind.

**Figur 10** zeigt ein weiteres Beispiel einer Kombination von verschiedenen Frequenzwandlungen (Ein- und Ausschleusungen), die beispielsweise dazu dienen kann, einzelne Produkte oder Scharen von aufeinanderfolgenden Produkten Eigenschaft- und/oder Sequenz-gesteuert aus einem Produktestrom auszuschleusen und nach einer Wartezeit auf Abruf in einen zweiten oder in den gleichen Produktestrom wieder einzuschleusen.

Die Sequenzwandlung gemäss Figur 10 besteht aus einer Warteschlaufe W, die zwischen den Pfaden für die beiden Produkteströme PS.1 und PS.2 angeordnet ist, wobei die Warteschlaufe für jeden Pfad der Produkteströme je eine Einschleusung ES und eine Ausschleusung AS aufweist und entsprechend jeder Pfad eine Einschleusung ES und eine Ausschleusung AS aufweist.

Der Betrieb einer derartigen Kombination als Ganzes ist Eigenschaft- und/oder Sequenz-gesteuert. Sollen die Produkteströme PS.1 und PS.2 stromabwärts von der Warteschlaufe W getaktet sein, sind mindestens zwischen den Ausschleusungen aus der Warteschlaufe und den Einschleusungen in die Ströme PS.1 und PS.2 Puffer vorzusehen.

**Figuren 11 bis 13** stellen beispielhafte Bearbeitungsschritte dar, wie sie im erfindungsgemässen Bearbeitungsverfahren anwendbar sind. Die Bearbeitungsschritte sind dargestellt als Bearbeitungsstationen (Rechtecke), in die Produkte auf mindestens einem Zuförderpfad zugefördert werden (gegen das Rechteck weisender Pfeil) und aus denen Produkte auf mindestens einem Wegförderpfad weggefördert werden (vom Rechteck wegweisender Pfeil). Die Produkte sind wiederum dargestellt als Kreise, Quadrate und Dreiecke, wobei bearbeitete Produkte, die sich in mindestens einer Eigenschaft vom entsprechenden nicht bearbeiteten Produkt unterscheiden, schraffiert dargestellt sind.

**Figur 11** zeigt einen rein Takt-gesteuerten Bearbeitungsschritt, in den ein getakteter Produktestrom einläuft und jedes Produkt in derselben Weise bearbeitet wird. Die dem Bearbeitungsschritt zugeführten Produkte sind identisch dargestellt, was aber keine Voraussetzung ist. Sie können sich ohne weiteres durch eine Eigenschaft voneinander unterscheiden, welche Eigenschaft aber für den betreffenden Bearbeitungsschritt nicht relevant ist (z.B. Heften von bereits individuell adressierten Zeitschriften oder von Zeitschriften gleicher Form aber verschiedenen Inhaltes). Die Produkte können auch eingangsseitig gepuffert und für die Bearbeitung eingetaktet werden.

Derselbe Bearbeitungsschritt kann statt Takt-gesteuert auch Objekt-gesteuert sein, derart, dass er aktiviert wird, wenn ein zu bearbeitendes Objekt vorhanden ist, anstatt in einem regelmässigen Takt. Dadurch wird es möglich, dem Bearbeitungsschritt einen ungetakteten Produktestrom zuzufördern.

**Figur 12** zeigt einen Sequenz- und Takt-gesteuerten Bearbeitungsschritt, in dem beispielsweise durch gesteuertes Unterdrücken der Bearbeitung in vorgegebenen Takten eine vorgegebene Sequenz von bearbeiteten und nicht bearbeiteten Produkten erstellt wird. Die Produkte der zu erstellenden Sequenz können sich auch durch unteschiedliche Bearbeitungsmodi unterscheiden. Auch ein derartiger Bearbeitungsschritt kann Objekt-gesteuert sein.

**Figur 13** zeigt einen weiteren, beispielhaften Bearbeitungsschritt, der Eigenschaft- und Takt-gesteuert ist. Als Dreiecke dargestellte Produkte werden nicht (oder nach Modus I) bearbeitet, während Produkte, die als Kreise und Quadrate dargestellt sind, bearheitet (oder nach Modus II bearbeitet) werden. Die Produkte werden in der dargestellten Variante eingangsseitig gepuffert und für die Bearbeitung eingetaktet.

Fig. 14a zeigt noch einen Bearbeitungsschritt, in den auf beispielsweise 4 Pfaden Teilprodukte zugeführt werden, die durch Vereinigung (Zuordnungsvorschrift z.B. Einstecken, Sammeln, Zusammentragen) zu Produkten verarbeitet werden. Dabei werden beispielsweise auf einem Pfad Hauptprodukte E1(HP) getaktet zugeführt, denen Eigenschaft- und/oder Sequenz-gesteuert Beilagen E.2 bis E.4 zugegeben werden, derart, dass sich die aus dem Bearbeitungsschritt auslaufenden Produkte EP in bezug auf das Hauptprodukt und/oder in Bezug auf die Beilagen unterscheiden können. Je nach Charakter der zugeführten Produkteströme (getaktet oder ungetaktet) kann der Bearbeitungsschritt Takt- oder Objekt-gesteuert sein.

Fig. 14b zeigt eine einfache Variante eines gleichen Bearbeitungsschrittes, wie er in der Figur 14 dargestellt ist, als dreidimensionale Darstellung der effektiv beteiligten Produkte (El und E2). Eine Gruppe G1 von beispielsweise identischen Hauptprodukten E1(HP) wird in einem Produktestrom PS1 gegen eine Ausschleusung AS gefördert Eine Gruppe G2 von beispielsweise identischen Einsteckprodukten E2 wird in einem zweiten Produktestrom PS2 gegen eine Ausschleusung AS gefördet. Wenn Einsteckprodukte bestehend aus E1 und E2 herzustellen sind und Produkte E1 und E2 an den Ausschleusungen der Produkteströme PS1 und PS2 simultan anwesend sind (beispielsweise durch Sensoren SE eruierbar), werden die Produkte E1 und E2 durch entsprechende Aktoren AK ausgeschleust, Produkte E1 geöffnet und Produkte E2 eingesteckt und das entstehende Produkt EP wird in einen weiteren Produktestrom PS3 eingeschleust (ES). Andere Produkte als E1 bzw. E2 in den Produkteströmen PS1 und PS2 werden nicht ausgeschleust. Produkte E1 bzw. E2 warten gegebenenfalls auf ein entsprechendes Produkt E2 bzw. E1.

Auch für die Bearbeitungsschritte gilt wie für die Sequenzwandlungen, dass sie beliebig kombinierbar sind und/oder dass durch Kombination der Merkmale der oben beschriebenen, beispielhaften Varianten neue Varianten ableitbar sind.

Mit den Begriffen Eigenschaft-gesteuert, Sequenz-gesteuert, Takt-gesteuert, Objekt-gesteuert sind Steuermodi von Sequenzwandlungen und Bearbeitungsschritten bezeichnet. Es mag in bestimmten Fällen vorteilhaft sein, wenn Sequenzwandlungen und/oder Bearbeitungsschritte von einem derartigen Steuermodus in einen anderen schaltbar sind.

**Figur 15** zeigt ein Schema einer beispielhaften Variante des erfindungsgemässen Verfahrens bestehend im wesentlichen aus einer Mehrzahl von Bearbeitungsschritten und einer Mehrzahl von Sequenzwandlungen, wobei Produkteströme zu den Bearbeitungsschritten und Sequenzwandlungen zugeführt und von ihnen weggeführt werden. Das Schema kann auch als Schema einer beispielhaften Einrichtung zur Durchführung des Verfahrens aufgefasst werden, das ein durch Transportpfade vernetztes System von Bearbeitungsstationen und Sequenzwandelstationen darstellt. Das Beispiel stammt wiederum aus dem Gebiete der Weiterverarbeitung von Druckprodukten, was aber nicht bedeuten soll, dass das erfindungsgemässe Verfahren nur auf diesem Gebiete anwendbar ist.

Im Schema der Figur 15 werden in Anlehnung an die vorangehenden Figuren 4 bis 14 Symbole mit den folgenden Bedeutungen verwendet:
- Rechteck: Bearbeitungsschritt bzw. Bearbeitungsstation;
- Kreis: Sequenzwandlung bzw. Sequenzwandelstation;
- durchgezogene Linie mit Richtungspfeil: Produktestrom bzw. Transportpfad für Produkte;
- Kreuz mit davon weg weisendem Pfeil: Wandlung von beispielsweise diskreten Lagereinheiten in einen Produktestrom bzw. beispielsweise Abwickelstation, Anleger etc.;
- Kreuz mit darauf zu weisendem Pfeil: Wandlung eines Produktestoms in beispielsweise diskrete Lagereinheiten oder Versandeinheiten bzw. beispielsweise Aufwickelstation, Paketierstation etc.

Der Fluss von Gegenständen bewegt sich im Verfahren, das in der Figur 15 dargestellt ist, im wesentlichen von links nach rechts Links sind drei Pfade 1, 2, 3 für Ströme PS von Ausgangsprodukten A.1, A.2 und A.3 dargestellt, wobei diese Ausgangsprodukte beispielsweise Teilprodukte von Druckpodukten (E1 ....) sind, die von Druckmaschinen (nicht dargestellt) in das erfindungsgemässe Verfahren eingespeist werden.

Die drei Pfade 1, 2, 3 münden in erste Sequenzwandelstationen 4, 5, 6 (Sequenz- oder Eigenschaft-gesteuerte Ausschleusung), in denen die Ausgangsprodukte gemäss einer vorgegebenen Sequenz oder nach Eigenschaften freigegeben werden für einen Weitertransport zu Bearbeitungsstationen 7 bzw. 8, zu Stationen, in denen sie zwecks Zwischenlagerung zu Lagerformationen gewandelt werden oder zu einer weiteren Sequenzwandelstation 10 (Sequenz- oder Eigenschaft-gesteuerte Einschleusung, vorzugsweise mit Eintaktung in einen weiteren Produktestrom 11).

Die beiden Bearbeitungsstationen 7 und 8 sind Stationen, in denen mehrere Teilprodukte zu einem Produkt vereinigt werden (z.B. Einstecktsysteme, Sammelsysteme. Zusammentragstrecke oder ähnliches), wie sie auch im Zusammenhang mit den Fig. 14a/b beschrieben worden sind. Zu derartigen Bearbeitungsstationen werden Teilprodukte in einer Mehrzahl von Strömen zugeführt, wobei diese Teilprodukteströme beispielsweise aus Lagereinheiten erzeugt werden, eine vorgängige Bearbeitungsstation 12 (z.B. Aufkleben eines Zusatzproduktes, das aus Lagerformationen, z.B. Paketen zugespeist wird) durchlaufen oder aus einer Sequenzwandelstation (5, 10, 6) zugeführt werden.

Die Bearbeitungsstationen 7 oder 8 bzw. die Produktezuführungen zu diesen Stationen können derart Eigenschaft und/oder Sequenz-gesteuert sein, dass die die Stationen verlassenden Produkteströme Produkte mit sehr verschiedenen Zusammensetzungen aufweisen.

Aus der Bearbeitungsstation 7 werden die Produkte über eine weitere Sequenzwandelstation 13 (z.B. Eigenschaft-gesteuerte Ausschleusung) wahlweise (beispielsweise entsprechend ihrer Dicke, die mit ihrer Zusammensetzung variiert) in eine weitere Bearbeitungsstation 14 oder 15 geführt werden (z.B. zum Heften oder Binden) oder diese bypassieren. Auf die Bearbeitungsstationen 14 und 15 folgt eine weitere Sequenzwandelstation 16 (z.B. Sequenz-gesteuerte Einschleusung mit eingangsseitiger Pufferung, mit Eintaktung und gegebenenfalls mit Warteschlaufe) in der die weiter bearbeiteten Produkte aus der Bearbeitungsstation 7 wieder zu einem getakteten Strom vereinigt werden. Aus diesem werden Eigenschaft-gesteuert Produkte ausgeschleust (Eigenschaft-gesteuerte Ausschleusung in Sequenzwandelstation 17), wobei die einen Produkte als Endprodukte einer Ausgangsverteilung zugeführt werden und die anderen einer weiteren Bearbeitung (z.B. Eigenschaft-gesteuerte Adressierung, Bearbeitungsstation 18) und einer Sequenzveränderung (Sequenzwandelstation 19, zur Erstellung einer vorgegebenen Adresssequenz) zugeführt werden. Von hier werden auch diese Produkte einer Ausgangsverteilung zugeführt.

In der Bearbeitungsstation 8 werden aus Teilprodukten, die aus der Sequenzwandelstation 6, aus Lagereinheiten und/oder in einem durch beispielsweise Sequenz-gesteuerte Einschleusung (Sequenzwandelstation 20) zweier verschiedener Produkte ab Lagereinheiten zugeführt werden, zu Zwischenprodukten vereinigt. Diese Bearbeitungsstation ist beispielsweise rein Takt-gesteuert, das heisst, sie liefert in einem regelmässigen Takt Produkte, die alle eine gleiche Anzahl von Teilprodukten enthalten, welche Produkte aber gemäss der Sequenzen der zugeführten Teilprodukte variieren können.

Die Produkte der Bearbeitungsstation 8 werden in einer Sequenzwandelstation 21 (z.B. Sequenz- und/oder Eigenschaft-gesteuerte Ausschleusung) auf zwei Pfade verteilt, wobei der eine ein Zuführungspfad zur Bearbeitungsstation 7 via Bearbeitungsstation 12 ist und der andere einer weiteren Bearbeitungsstation 22 (z.B. Heften und mit Rückenstreifen versehen) zugeführt wird. Die Bearbeitungsstation 22 ist dabei mit einer Kontrollschlaufe kombiniert, die beispielsweise die folgende Funktion hat: die aus der Bearbeitungsstation ausgelieferten Produkte werden in einer Eigenschaft-gesteuerten Ausschleusung (Sequenzwandelstation 23) bei als in Ordnung eingestuften Eigenschaften einer weiteren Bearbeitungsstation 24 (z.B. Sequenz-gesteuerte Adressierung) zugeführt, bei fehlerhafter Qualität als Ausschuss aus dem Verfahren ausgeschleust (Endprodukt EP.0) oder bei fehlendem Rückenstreifen in die Bearbeitungsstation 22 zurückgeführt (Sequenzwandelstation 25). Die aus der Bearbeitungsstation 24 weggeförderten Produkte werden einer Ausgangsverteilung zugeführt.

Die Ausgangsverteilung besteht aus weiteren Sequenzwandelstationen 30 bis 38, wobei es sich bei den Sequenzwandelstationen 30 und 31 beispielsweise um Sequenz-gesteuerte Ausschleusungen (gemäss Bedarf der folgenden Stationen), bei den Sequenzwandelstationen 32 bis 35 beispielsweise um Eigenschaft-und Sequenz-gesteuerte Ausschleusungen (z.B. nach einer vorgegebenen Postleitzahlen-Sequenz) gegebenenfalls mit eingangsseitiger Pufferung und bei den Sequenzwandelstationen 36 bis 38 um beispielsweise Eigenschaft- und Sequenz-gesteuerte Einschleusungen (wiederum gemäss Postleitzahlensequenz) mit eingangsseitiger Pufferung und Eintaktung handelt Zwischen den aufeinanderfolgenden Paaren von Sequenzwandelstationen (34/36, 35/37, 35/38 etc) könnten bedarfsweise noch Sequenzwandelstationen zur Sequenzveränderung (für Sequenzkorrekturen) eingeschaltet werden.

Von der Sequenzwandelstation 31 ist auch noch ein Produkteabgang zu einer Wandlung in Lagereinheiten eingezeichnet. Es kann sich dabei um eine Zwischenlagerung für im Moment nicht gebrauchte, nicht adressierte Produkte handeln, die dann beispielsweise zu einem späteren Zeitpunkt bei den Sequenzwandelstationen 36 und 38 oder auch an anderen entsprechend markierten Stellen des Verfahrens wieder eingeschleust werden.

Es ist ohne weiteres vorstellbar, dass das Verfahren gemäss Figur 15 erweitert werden kann durch einen Pfad für einen Produktestrom, der einen weiteren Eingang für Ausgangsprodukte oder eine der Sequenzwandlungen 4, 5 oder 6 direkt mit einer der Sequenzwanndlungen 30 bis 38 verbindet.

Die Ströme von Endprodukten EP.1 bis EP.3 weisen beispielsweise eine mindestens Paketier-gerechte Produktesequenz auf und werden beispielsweise in diskrete Versandeinheiten in Form von Paketen gewandelt. Für die Erstellung einer Postrouten-gerechten Paketsequenz können gegebenenfalls an den Ausgängen EP.1 bis EP.3 weitere Sequenzwandelstationen angeschlossen werden, die sich aber mit Paketen, also mit einem anderen Stückgut befassen als das beschriebene Verfahren und damit als anschliessendes weiteres Bearbeitungsverfahren behandelt werden müsste.

Es ist aus der Figur 15 ersichtlich, dass mit Hilfe des dargestellten Verfahrens bzw. der dargestellten Einrichtung verschiedenste, die Bearbeitungsschritte verschieden vernetzt benützende Prozesse durchführbar sind, je nach Art der Ausgangsprodukte und je nach Art der herzustellenden Endprodukte. Verschiedenartige derartige Prozesse, die an sich keine Verbindung untereinander aufweisen, können auch zeitlich parallel durchgeführt werden, um damit die Auslastung der Einrichtung und damit deren Stückleistung so hoch wie möglich zu halten. Durch eine kontextorientierte Steuerung, in der Steuerkontexte wirken, deren Kontexelemente nicht einem einzigen, lokal und/oder funktional begrenzten Bereich zugeordnet sind, kann auch sichergestellt werden, dass ein für einen Bearbeitungsschritt benötigtes Produkt zur richtigen Zeit an der richtigen Stelle zur Verfügung gehalten werden kann.

Die Figur 15 zeigt, wie bereits erwähnt, lediglich ein Beispiel für das erfindungsgemässe Verfahren und limitiert dieses in keiner Weise weder auf den Anwendungsbereich der Weiterverarbeitung von Erzeugnissen von Druckmaschinen noch auf die spezifische in der Figur 15 dargestellte Ausgestaltung.

Wie bereits eingangs erwähnt, müssen auch für die Steuerung des erfindungsgemässen Verfahrens neue Wege beschritten werden, um der neu möglichen Komplexität und Flexibilität gerecht zu werden. Die Steuerungen bekannter Bearbeitungsverfahren für Stückgut brauchen die einzelnen Produkte während der Bearbeitung, wenn überhaupt, nur als Stelle in einem im wesentlichen Sequenz-invarianten Strom zu kennen (beispielsweise als fehlerhaftes Produkt, das bei der nächsten Gelegenheit auszuschleusen ist, oder als Lücke, die einem Produkt mit Null-Eigenschaften gleichzusetzen ist und die in der nächsten Bearbeitungsstation nicht bearbeitet werden muss) und befassen sich höchstens punktuell (z.B. Kontrollschritte) mit den effektiven Eigenschaften dieser Produkte. Über weite Strecken der bekannten Verfahren werden aber Bearbeitungsschritte und auch Transportbewegungen miteinander gekoppelt oder mehr oder weniger unabhängig voneinander rein Takt- oder gegebenenfalls Objekt-gesteuert (getaktet regelmässig oder gegebenenfalls durch Präsenz eines Objektes ausgelöste Aktionen).

Für die Durchführung des erfindungsgemässen Verfahrens wird nun auch von der Steuerung eine wesentlich gesteigerte Flexibilität verlangt, die auch bei einer hohen Verfahrenskomplexität gewährleistet werden muss.

Zusätzlich zur Zeitanbindung (Taktregime), die das Hauptmerkmal der bekannten Steuerungen für Stückgutbearbeitungen darstellt, oder anstelle dieser Zeitanbindung wird eine Kontext-orientierte Steuerung (Kontext im Sinne von Situationszusammenhang) angewendet, das heisst eine Aktion wird nicht wie im Taktregime zu einer vorgegebenen Zeit ausgelöst, sondern dann, wenn sich ein bestimmter Situationszusammenhang oder Kontext ergeben hat, das heisst beispielsweise, wenn ein zu bearbeitender Gegenstand mit bestimmten Eigenschaften an eine bestimmte Stelle transportiert worden ist oder wenn eine Vorrichtung für eine bestimmte Bearbeitung konfiguriert worden ist, kurz, wenn ein aktueller Kontext mit einem vorgegebenen oder bedingten Kontext übereinstimmt.

Eine Kontext-orientierte Steuerung basiert also im wesentlichen auf einer grossen Anzahl von Steuerkontexten, die je mindestens einen bedingten Kontext oder mindestens eine Gruppe von miteinander verbundenen Kontexten und mindestens eine auszulösende Aktion oder Aktionengruppe enthalten, wobei jede Aktion oder Aktionengruppe mit je einem bedingten Kontext oder einer Kontextgruppe zu einem Paar verbunden ist. Enthält ein Steuerkontext mehrere Paare von bedingtem Kontext und Aktion, können diese nach Prioritäten oder in einer nacheinander abzuhandelnden Sequenz (für Sequenz-gesteuerte Aktionen) geordnet sein. Die Steuerkontexte entfalten ihre steuernde Wirkung derart, dass bei Übereinstimmung von aktuellem und bedingtem Kontext die mit diesem Kontext verbundene Aktion ausgelöst wird (d.h. die Übereinstimmung von aktuellem und bedingtem Kontext wird damit Auslösekriterium für die dem Kontext zugeordnete Aktion), wodurch ein oder mehrere neue, aktuelle Kontexte geschaffen werden, die zur Auslösung weiterer Aktionen mit weiteren bedingten Kontexten verglichen werden.

Die Summe aller Steuerkontexte stellt ein Bild des gesamten Bearbeitungsverfahrens mit allen seinen Möglichkeiten dar. In das Kontext-orientierte Steuerverfahren zur Steuerung des erfindungsgemässen Verfahrens können ohne Schwierigkeiten auch die Herstellung der in das Bearbeitungsverfahren einzuführenden Ausgangsprodukte, die Verwaltung der aus Produkteströmen zur Zwischenlagerung erstellten Lagereinheiten, deren Wiedereinspeisung in das Bearbeitungsverfahren durch Rückwandlung in einen Produktestrom sowie auch die Kontrolle von zugelieferten Ausgangsprodukten und von Endprodukten integriert werden.

Die zu bearbeitenden Ausgangsprodukte werden als einzelne Produkte oder in Scharen von aufeinanderfolgenden Produkten prozessgerecht in das Verfahren eingespeist und in aufeinanderfolgenden Bearbeitungsschritten bearbeitet, wobei sie zwischen Bearbeitungsschritten aus der aktiven Bearbeitung entnommen, passiv gemacht (auf Warteschlaufen einzeln oder als kleinere Scharen für kürzere Wartezeiten, als grössere Scharen in Lagerformationen für Zwischenlagerungen) und anschliessend wieder aktiviert, also in Produkteströme eingeschleust oder zu solchen gewandelt werden. Dies geschieht alles unter dem Regime einer gemeinsamen Kontext-orientierten Prozesssteuerung, die sich an einer Vielzahl von vorbestimmten Steuerkontexten, die zu prozessgerechten Kontextfeldern geordnet sind, ausrichtet.

Ein Steuerkontext für einen Eigenschaft-gesteuerten Bearbeitungsschritt besteht also beispielsweise aus alternativen Paaren {Eigenschaft → Aktion}; für den Bearbeitungsschritt gemäss Figur 13 bedeutet dies für einen Takt-gesteuerten Betrieb: {rund oder quadratisch → bearbeiten; dreieckig → Bearbeitung unterdrücken} und für einen Objekt-gesteuerten Betrieb {Objekt vorhanden und rund oder quadratisch → bearbeiten}. Für eine Sequenz- und Objektgesteuerte Bearbeitungsstation (z.B. gemäss Figur 12) heisst ein beispielhafter Steuerkontext für jede aktuelle Position in der vorgegebenen, zu erstellenden Sequenz: {Objekt vohanden und aktuelle Sequenzposition = z → Sequenzpositionsgerecht (z) bearbeiten und Position in der zu erstellenden Sequenz um 1 erhöhen}, wobei die noch nicht abgearbeiteten Paare von Sequenzposition und Aktion gemäss verschiedenster Bedingungen stromabwärts (z.B. Fehler, die eine Mehrproduktion eines bestimmten Produktes bedingen) während einem Prozessablauf fortwährend aktualisierbar sind.

Ein beispielhafter Steuerkontext für eine Sequenzwandelstation gemäss Figur 8 oder 9 lautet für die Sequenzposition f: {Eigenschaft = f → auf Pfad weiterfördern; Eigenschaft > f → auf Warteschlaufe fördern; Eigenschaft < f → auf Überholpfad fördern}.

Für Aktionen, die eine Synchronisation, z.B. von zwei parallel geführten, getakteten Produkteströmen, oder Ähnliches bewirken, beinhalten die bedingten Kontexte auch zeitliche Bedingungen.

Für die Steuerung eines Prozesses gemäss dem erfindungsgemässen Verfahren sind Prozesspfade zu erstellen, die eine hohe Zahl von Kontexten, die zu Kontextfeldern geordnet sind, nacheinander durchlaufen.

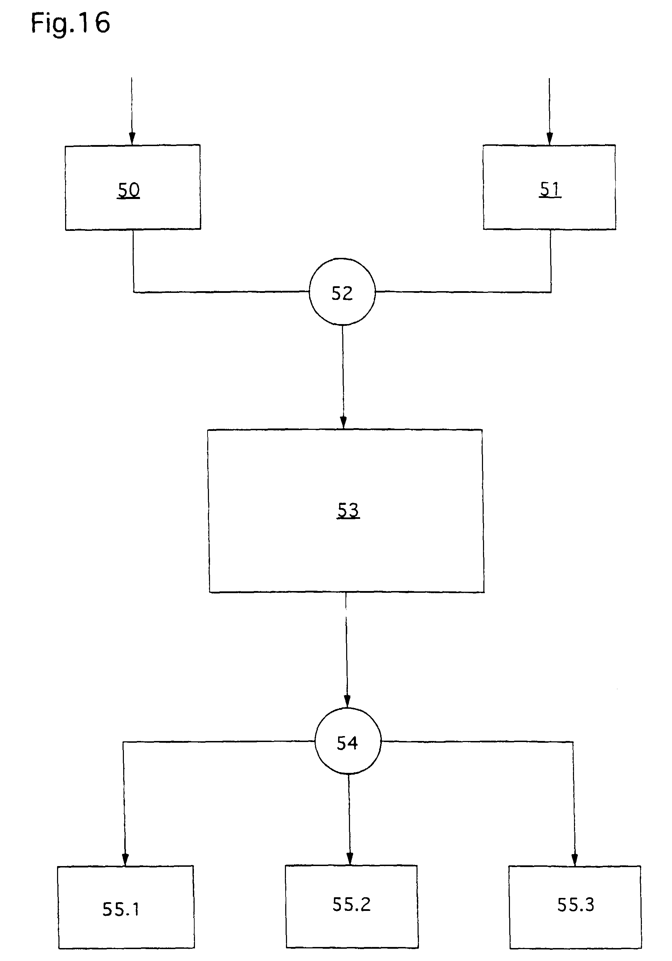

**Figur 16** zeigt schematisch, wie zur Erstellung derartiger Kontextfelder vorgegangen wird.

Vor der reellen Initialisierung eines Prozesses, der nach dem erfindungsgemässen Verfahren ablaufen soll, wird eine Art Bestandesaufnahme in Form von Datensätzen gemacht. Diese umfassen einerseits mögliche, bedingte Kontexte (z.B. während dem Prozess auftretende Produkte oder Produktegruppen, die anhand von relevanten Eigenschaften oder als Positionen in zu erstellenden oder erstellten Sequenzen erfassbar sind, Zustände von Vorrichtungen, zu erstellende Sequenzen, zeitliche Bedingungen etc.) und sie umfassen andererseits notwendige und mögliche Aktionen (nach einem bestimmten Bearbeitungsmodus bearbeiten, Vorrichtung einschalten, Weiche in bestimmte Position stellen, Sequenzposition in vorgegebener Sequenz um 1 erhöhen, vorgegebene Sequenz aktualisieren, gespeicherte Daten, z.B. codierte Produkteeigenschaften aktualisieren etc.).

Die genannten Beispiele zeigen, dass Aktionen sich auf eine reelle Ebene (Vorrichtungen einschalten, Weichen stellen etc.) beziehen können oder aber auch auf eine virtuelle Ebene (zu erstellende Sequenzen oder Daten aktualisieren etc.).

pie Datensätze für bedingte Kontexte und Aktionen werden in Bibliotheken 50 für bedingte Kontexte und 51 für Aktionen abgelegt und dann für durchzuführende Prozesse zu Paaren und Steuerkontexten zusammengestellt (52). Die Steuerkontexte werden in einer Kontextbibliothek 53 abgelegt. Das Anlegen einer Kontextbibliothek 53 bedeutet das Aufnehmen einer sehr hohen Zahl von Daten, doch innerhalb des Bearbeitungsprozesses müssen nur noch Änderungen berücksichtigt werden, was im Verhältnis dazu wenig Daten erfordert und schnell und flexibel durchführbar ist. Daraus resultiert, dass durch eine Erhöhung der Verfahrens-Komplexität der Aufwand nicht überproportional ansteigt und aus diesem Grunde auch bei steigender Komplexität die gewünschte Flexibilität aufrechterhalten werden kann.

Unter einer Kontextbibliothek ist eine Datenbank zu verstehen, in der Datensätze, die Steuerkontexte (K) darstellen, zur Verarbeitung bereitgehalten werden. Derartige Bibliotheken sind im wesentlichen beliebig ausbaubar. Es können darin auch unvollständige Steuerkontexte (z.B. Fehlerkontexte für nicht vorhersehbare Fehler) gespeichert werden, die dann während dem Prozess in einer Art Lernverfahren vervollständigt werden. Es sind selbstverständlich neben den für eine Prozessdurchführung notwendigen Steuerkontexten auch Steuerkontexte für vorhersehbare, nur eventuell auftretende Fehler zu speichern.

Es ist auch möglich in selbstlernenden Vorgängen für die Kontextbibliothek 53 während dem Prozessablauf ständig neue Steuerkontexte (K) zu erfassen und zu bewerten. Solche neuen Kontexte können zur sukzessiven Verfeinerung des Steuerverfahrens, zur Optimierung eines Prozesses, zur Optimierung der Verknüpfung mehrerer, mindestens teilweise simultan ablaufender Prozesse oder für Prozesswechsel herangezogen werden. Die in der Kontextbibliothek gespeicherten Steuerkontexte bilden eine Art von Macros, die dann für jeden bestimmten Prozess (bestimmte Ausgangsprodukte (A) und bestimmte Endprodukte (EP)) zu einem Kontextfeld 55.1 bis 553 zusammengestellt (54) werden, welches Kontextfeld während dem Prozessablauf auf von Steuerkontext zu Steuerkontext führenden Prozesspfaden durchlaufen wird.

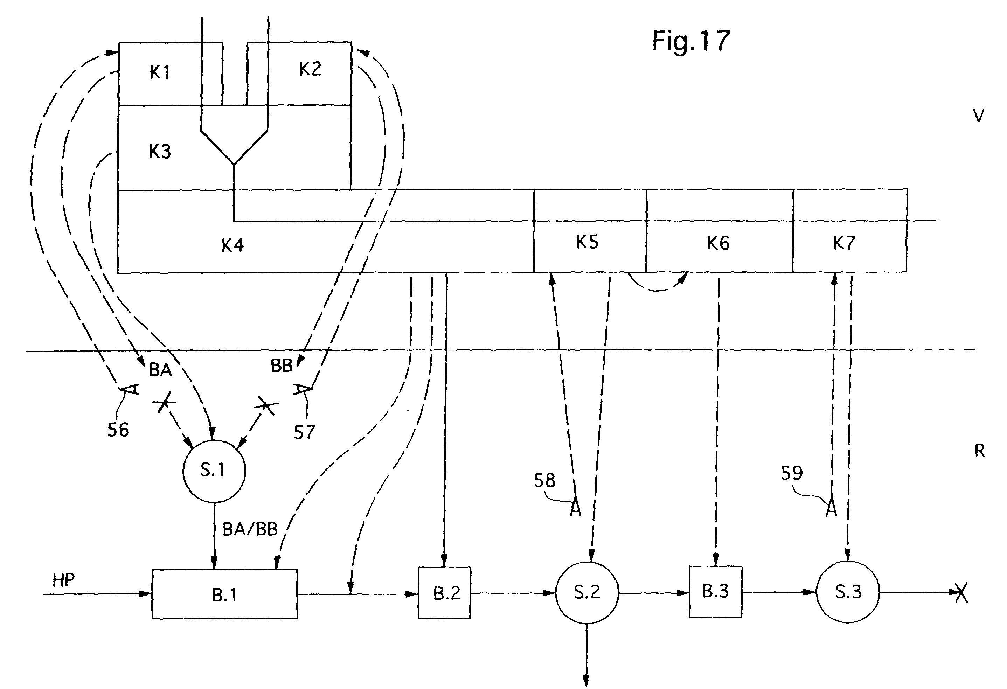

Dieses Durchlaufen der Kontextfelder stellt ein virtuelles Abbild dar von der Art wie im entsprechenden Prozess reelle Produkteströme das Verfahren durchlaufen und bearbeitet werden, wobei die Verbindung zwischen virtueller Ebene und reeller Ebene gemäss Steuerkontexten generierte Steuerbefehle für reelle Vorrichtungen sowie Sensorsignale, die Eigenschaften von Produkten oder Zustände von Vorrichtungen repräsentieren (siehe auch Beschreibung zu Figur 17). Zwei relativ einfache Beispiele von Kontextfeldern zeigen die Figuren 1 und 2.

Die Wirkung eines Kontext-orientierten Steuerverfahrens auf ein Bearbeitungsverfahren für Stückgut ist an einem sehr einfachen Beispiel als Interaktion zwischen einer virtuellen und einer reellen Ebene in der **Figur 17** schematisch dargestellt.

Der betrachtete, sehr einfache Prozess umfasst in der reellen Ebene R (in der Figur unten) eine Vereinigung von Teilprodukten (Zusammentragen, Bearbeitungsschritt B1), für die Hauptprodukte HP und Beilagen BA oder BB zusammengetragen werden. Die Beilagen BA und BB werden aus Lagereinheiten bezogen, die in Produkteströme gewandelt und einer Sequenzwandlung S.1 zugeführt werden, in der in einen Beilagenstrom BA/BB Sequenz-gesteuert Beilagen BA oder BB eingeschleust werden.

Die Wandlung der Lagereinheiten von Beilagen in Produkteströme wird erst freigegeben, wenn die relevante Eigenschaft der Beilagen verifiziert ist (Sensoren 56 und 57).

Die vereinigten Produkte werden nach dem Bearbeitungsschritt B.1 gebunden (Bearbeitung B.2) und dann einer zweiten Sequenzwandlung S.2 zugeführt, in der Eigenschaft-gesteuert schlecht gebundene Produkte ausgeschleust werden.

Die reelle Eigenschaft der Bindequalität wird durch einen Sensor 52 erfasst. Die gut gebundenen Produkte werden einer Adressierung (B.3) zugeführt, in der sie gemäss einer vorgegebenen, gemäss Aktionen von S.2 aktualisierten Adresssequenz (Aktualisieren der Adresssequenz: gestrichelter Pfeil von K5 nach K6) adressiert werden. Dann werden sie einer dritten Sequenzwandlung S.3 zugeführt, in der Eigenschaft-gesteuert die effektiv vorgegebene Adresssequenz eingestellt wird (Erfassung der reellen Eigenschaft Adresse durch Sensor 59 oder anhand der aktualisierten Adresssequenz für B.3).

Das für den oben skizzierten Prozess zu durchlaufende Kontextfeld ist in einer virtuellen Ebene V (in der Figur oben) dargestellt. Es umfasst die folgenden Kontexte:
- K1:: {vorhande Lagereinheit enthält BA → Lagereinheit zu Produktestrom wandeln; Lagereinheit enthält nicht BA → Lagereinheit auswechseln} (Erfassung des aktuellen Kontexts durch Sensor 56);
- K2:: {vorhande Lagereinheit enthält BB → Lagereinheit zu Produktestrom wandeln; Lagereinheit enthält nicht BB → Lagereinheit auswechseln} (Erfassung des aktuellen Kontexts durch Sensor 57);
- K3:: {BA vorhanden und Sequenzposition bedingt Zugabe von BA → BA einschleusen und Sequenzposition um 1 erhöhen; BB vorhanden und Sequenzposition bedingt Zugabe von BB → BB einschleusen und Sequenzposition um 1 erhöhen} (Erfassung des aktuellen Kontexts auf virtueller Ebene: durch Registrieren der Positionen der Lagereinheiten von BA und BB);
- K4:: {HP und BA oder BB vorhanden → Vereinigen und Weiterfördern und Binden} (Erfassung des aktuellen Kontexts auf virtueller Ebene: in S.1 hergestellte Beilagensequenz);
- K5:: {Bindung o.k. → weiterfördern; Bindung nicht o.k → ausschleusen und Adresssequenz für K6 aktualisieren} (Erfassung des aktuellen Kontexts durch Sensor 58);
- K6:: {Produkt vorhanden, Sequenzposition z → Adressieren gemäss Sequenzposition z, Adresssequenzposition um 1 erhöhen} (Erfassung des aktuellen Kontexts auf virtueller Ebene: Position in aktualisierter Adresssequenz);
- K6:: {Adresse gemäss aktueller Position in vorgegebener Adresssequenz → auf Pfad weiterfördern; Adresse gemäss späterer Position in vorgegebener Adresssequenz → auf Warteschlaufe fördern; Adresse gemäss früherer Position in vorgegebener Adresssequenz → auf Überholpfad fördern} (Erfassung des aktuellen Kontexts virtuell: aktualisierte Adresssequenz; oder reell durch Sensor 59).

In der Figur 17 sind mit einer Linie die Interaktionen zwischen reeller Ebene und virtueller Ebene dargestellt. Es handelt sich dabei wie bereits erwähnt insbesondere um von der virtuellen Ebene zur reellen Ebene übermittelte Steuerimpulse und um von der reellen Ebene zur virtuellen Ebene übermittelte Sensorsignale.

Für die Durchführung des erfindungsgemässen Verfahrens wird eine Einrichtung geschaffen, wie sie als beispielhafte Variante in der Figur 17 dargestellt ist. Diese Einrichtung weist mindestens eine Bearbeitungsstation, insbesondere eine Mehrzahl von Bearbeitungsstationen auf und mindestens eine Sequenzwandelstation, wobei eine Vielzahl von Transportpfaden zu den Bearbeitungs- und Sequenzwandelatationen und von diesen weg angeordnet sind. Ferner weist die Einrichtung Antriebe und Führungsmittel auf, mit denen einzelne Produkte oder Produktegruppen entlang der Transportpfade förderbar sind. Um insbesondere in den Sequenzwandelstationen eine Vielzahl von Übergaben von Produkten von Transport- bzw. Führungsmitteln an andere zu vermeiden, werden vorteilhafterweise voneinander unabhängige Transportorgane eingesetzt, die vorteilhafterweise auch als Führungsmittel ausgestaltet sind, derart dass die Produkte in definierten, gegebenenfalls durch entsprechende Steuerung veränderbaren Positionen transportierbar sind. Als Antrieb für den Transport der Transportorgane entlang der Transportstrecken sind beispielsweise stationäre Antriebe vorgesehen, die mit den Transportorganen über eine bestimmte Länge eines Transportpfades in Interaktion sind. Dieselben oder ähnliche Antriebe werden auch für das Eintakten von Transportorganen eingesetzt.

Für die Identifikation der von Transportorganen einzeln oder in Gruppen geförderten Produkte können die Transportorgane mit elektronischen Speichermitteln versehen sein, die durch entsprechende Schreib- und/oder Lesegeräte zur Aktualisierung der gespeicherten Daten umgeschrieben und/oder für die Erfassung von aktuellen Kontexten ausgelesen werden.

## Patentansprüche

1. Bearbeitungsverfahren zur Bearbeitung von Stückgut, mit welchem Verfahren grosse Zahlen mindestens ähnlicher Gegenstände bearbeitet werden, dadurch, dass Gegenstände als Ströme (PS) von Ausgangsprodukten (A) dem Verfahren zugeführt werden, dass Ausgangsprodukte (A) und/oder Zwischenprodukte (E) als Produkteströme (PS) mindestens einem Bearbeitungsschritt (7, 8, 12, 14, 15, 18, 22, 24, B1 bis B3) zugeführt, bearbeitet und aus dem mindestens einen Bearbeitungsschritt weggeführt werden und dass in dem Verfahren bearbeitete Gegenstände als Ströme (PS) von Endprodukten (EP) aus dem Verfahren weggeführt werden, wobei in den zugeführten und weggeführten Produkteströmen (PS) einzelne Produkte (p) oder Produktegruppen (G) in einer Sequenz nacheinander gefördert werden, wobei in dem mindestens einen Bearbeitungsschritt mindestens eine Eigenschaft der Produkte oder Produktegruppen veränderbar ist oder ein Produkt oder eine Produktegruppe mit weiteren Produkten oder Produktegruppen vereinigbar ist und wobei die Sequenz von Produkten (p) oder Produktegruppen (G) in Produkteströmen (PS) durch Ausschleusen (AS) und/oder Einschleusen (ES) von Produkten (p) oder Produktegruppen (G) in andere Ströme bzw. aus anderen Strömen oder durch Aus- und Einschleusen von Produkten oder Produktegruppen aus demselben in denselben Strom gewandelt wird, **dadurch gekennzeichnet**, dass die Sequenzwandlungen (S1, S2, 4, 5, 6, 10, 13, 16, 17, 19, 20, 21, 23, 25, 30 bis 38) gemäss relevanten Eigenschaften der zugeführten Produkte oder Produktegruppen und/oder mindestens teilweise gemäss einer vorgegebenen, zu erstellenden Sequenz gesteuert werden und dass das Bearbeitungsverfahren mindestens teilweise anhand von Steuerkontexten (K) gesteuert wird, wobei in jedem Steuerkontext (K) mindestens ein bedingter Kontext oder mindestens eine bedingte Kontextgruppe mit je einer Aktion oder einer Aktionengruppe derart verbunden ist, dass bei Übereinstimmung eines aktuellen Kontextes oder einer aktuellen Kontextgruppe mit einem der bedingten Kontexte oder Kontextgruppen die damit verbundene Aktion (A) ausgelöst wird, wobei mindestens ein Teil der bedingten Kontexte aus einer Mehrzahl von Kontextelementen besteht, wobei in mindestens einem Teil der Steuerkontexte Kontextelemente und Aktionen miteinander verknüpft werden, die verschiedenen Verfahrensbereichen zugehören, und wobei mindestens ein Teil der Steuerkontexte Datenaktualisierungen und Änderungen von bedingten Kontextelementen als Aktionen enthalten.

2. Verfahren nach Anspruch 1, **dadurch gekennzeichnet,** dass auch der mindestens eine Bearbeitungsschritt (7, 8, 12, 18) gemäss relevanten Eigenschaften der zugeführten Produkte oder Produktegruppen und/oder gemäss einer vorgegebenen, zu erstellenden Sequenz gesteuert wird.

3. Verfahren nach Anspruch 1 oder 2, **dadurch gekennzeichnet,** dass die Ströme (PS) von Produkten (p) oder Produktegruppen (G), die zugeführt oder weggeführt werden getaktete oder nicht getaktete Ströme (PS) sind.

4. Bearbeitungsverfahren nach einem der Ansprüche 1 bis 3, **dadurch gekennzeichnet,** dass Sequenzwandlungen (S) und/oder Bearbeitungsschritte (B) zusätzlich durch ein Taktregime oder durch die Präsenz eines freizugebenden oder zu bearbeitenden Objektes gesteuert sind.

5. Bearbeitungsverfahren nach einem der Ansprüche 1 bis 4, **dadurch gekennzeichnet,** dass Produkteströme (PS), in die Produkte (p) oder Produktegruppen (G) eingeschleust oder aus denen Produkte oder Produktegruppen ausgeschleust werden, Ströme sind, die auf Warteschlaufen (W) oder auf Überholpfaden (U) laufen.

6. Bearbeitungsverfahren nach einem der Ansprüche 1 bis 5, **dadurch gekennzeichnet,** dass Ströme, die von Sequenzwandlungen (S) weggefördert oder Bearbeitungsschritten (B) zugefördert werden eingetaktet werden.

7. Bearbeitungsverfahren nach einem der Ansprüche 1 bis 6, **dadurch gekennzeichnet,** dass die Produkte oder Produktegruppen vor Sequenzwandlungen (S) und/oder vor Bearbeitungsschritten (B) gepuffert werden.

8. Bearbeitungsverfahren nach einem der Ansprüche 1 bis 7, **dadurch gekennzeichnet,** dass die relevanten Eigenschaften von Produkten oder Produktegruppen für die Steuerung von Sequenzwandlungen und/oder Bearbeitungsschritten (B) durch Sensoren (56 bis 59) erfasst werden, von durch die Produkte oder Produktegruppen mitgeführten, elektronischen Speichern in codierter Form ausgelesen oder durch Aktualisierung entsprechender, zentral gespeicherter Datensätze erfasst werden.

9. Bearbeitungsverfahren nach einem der Ansprüche 1 bis 8, **dadurch gekennzeichnet,** dass die vorgegebenen Sequenzen Sequenzen von herzustellenden Endprodukten (EP) sind oder aus solchen abgeleitet werden.

10. Bearbeitungsverfahren nach Anspruch 9, **dadurch gekennzeichnet,** dass die vorgegebenen Sequenzen gemäss Prozesszuständen aktualisierbar sind.

11. Bearbeitungsverfahren nach einem der Ansprüche 1 bis 10, **dadurch gekennzeichnet,** dass mindestens ein Teil der Produkteströme (PS) durch Wandlung diskreter Lagereinheiten erstellt wird und/oder dass mindestens ein Teil der Produkteströme (PS) in diskrete Lagereinheiten gewandelt werden.

12. Bearbeitungsverfahren nach einem der Ansprüche 1 bis 11, **dadurch gekennzeichnet,** dass die Produkte oder Produktegruppen in den Produkteströmen (PS) mit Hilfe von voneinander unabhängigen Transportorganen gefördert werden.

13. Bearbeitungsverfahren nach einem der Ansprüche 1 bis 12, **dadurch gekennzeichnet,** dass die Ausgangsprodukte (A) mindestens teilweise Erzeugnisse von Druckmaschinen sind, dass die Zwischenprodukte (E) mindestens teilweise Teilprodukte für Druckprodukte sind und dass die Endprodukte (EP) Druckprodukte wie Zeitungen, Zeitschriften oder Broschüren mit verschiedenen sich unterscheidenden Eigenschaften sind.

14. Steuerverfahren zur Steuerung des Bearbeitungsverfahrens nach einem der Ansprüche 1 bis 13, **dadurch gekennzeichnet**, dass Bearbeitungsschritte (7, 8, 12, 14, 15, 18, 22, 24, B1 bis B3) und Sequenzwandlungen (S1, S2, 4, 5, 6, 10, 13, 16, 17, 19, 20, 21, 23, 25, 30 bis 38) gesteuert werden anhand von ihnen zugeordneten Steuerkontexten (K), in denen mindestens ein bedingter Kontext oder mindestens eine bedingte Kontextgruppe mit je einer Aktion oder einer Aktionengruppe derart verbunden ist, dass Übereinstimmung eines aktuellen Kontextes oder einer aktuellen Kontextgruppe mit einem der bedingten Kontexte oder Kontextgruppen die damit verbundene Aktion auslöst, wobei in jedem Steuerkontext (K) mindestens ein bedingter Kontext oder mindestens eine bedingte Kontextgruppe mit je einer Aktion oder einer Aktionengruppe derart verbunden ist, dass bei Übereinstimmung eines aktuellen Kontextes oder einer aktuellen Kontextgruppe mit einem der bedingten Kontexte oder Kontextgruppen die damit verbundene Aktion (A) ausgelöst wird, wobei mindestens ein Teil der bedingten Kontexte aus einer Mehrzahl von Kontextelementen besteht, wobei in mindestens einem Teil der Steuerkontexte Kontextelemente und Aktionen miteinander verknüpft werden, die verschiedenen Verfahrensbereichen zugehören, und wobei mindestens ein Teil der Steuerkontexte Datenaktualisierungen und Änderungen von bedingten Kontextelementen als Aktionen enthalten.

15. Steuerverfahren nach Anspruch 14, **dadurch gekennzeichnet,** dass bedingte Kontexte und mögliche Aktionen als Datensätze gespeichert werden, dass daraus Steuerkontexte (K) erstellt und in einer Kontextbibliothek (53) abgelegt werden und dass aus den Steuerkontexten (K) Kontextfelder (55.1, 55.2, 55.3) für spezifische Prozesse erstellt werden.

16. Steuerverfahren nach Anspruch 14 oder 15, **dadurch gekennzeichnet,** dass bedingte und aktuelle Kontexte Eigenschaften von Produkten, Sequenzpositionen und/oder zeitliche Bedingungen enthalten.

17. Steuerverfahren nach einem der Ansprüche 14 bis 16, **dadurch gekennzeichnet,** dass die Aktionen reelle Bewegungen von Vorrichtungsteilen oder virtuelle Aktualisierungen von Datensätzen sind.

18. Steuerverfahren nach einem der Ansprüche 14 bis 17, **dadurch gekennzeichnet,** dass als aktuelle Kontexte Sensorsignale, Zählerstände, Uhrzeiten und/oder aktualisierte Datensätze erfasst werden.

19. Einrichtung zur Durchführung des Verfahrens nach einem der Ansprüche 1 bis 13, welche Einrichtung Bearbeitungsstationen (7, 8, 12, 14, 15, 18, 22, 24, B1 bis B3) zur Bearbeitung von Ausgangsprodukten (A) und/oder Zwischenprodukten (E), Sequenzwandelstationen (S1, S2, 4, 5, 6, 10, 13, 16, 17, 19, 20, 21, 23, 25, 30 bis 38) zur Wandlung von Produktesequenzen in Produkteströmen und mit mindestens einem Mittel zum Einschleusen (ES) von einzelnen Produkten oder von Produktegruppen in einen Produktestrom (PS) oder zum Ausschleusen (AS) von einzelnen Produkten oder Produktegruppen aus einem Produktestrom, Bearbeitungsstationen und Sequenzwandelstationen vernetzende Förderpfade zur Zuführung von Produkteströmen (PS) zu Bearbeitungsstationen und Sequenzwandelstationen und zur Wegführung von Produkteströmen von Bearbeitungsstationen und Sequenzwandelstationen und Mittel zum Fördern von Produkteströmen (PS) entlang von Förderpfaden (1 bis 3) aufweist, **dadurch gekennzeichnet,** dass die Einrichtung zusätzlich Steuermittel zur mindestens teilweisen Steuerung von Bearbeitungsstationen und Sequenzwandelstationen anhand von Steuerkontexten und Mittel zur Erfassung von aktuellen Kontextelementen aufweist.

20. Einrichtung nach Anspruch 19, **dadurch gekennzeichnet,** dass zum Transport von einzelnen Produkten (p) oder Produktegruppen (G) voneinander unabhängige Transportorgane vorgesehen sind.

21. Einrichtung nach einem der Ansprüche 19 oder 20, **dadurch gekennzeichnet,** dass die Steuermittel einen zentralen Rechner oder ein Netzwerk von Rechnern aufweisen.

22. Einrichtung nach Anspruch 21, **dadurch gekennzeichnet,** dass der Rechner oder die Rechner mit gespeicherten Datenbanken von bedingten Kontexten, von möglichen Aktionen und von Steuerkontexten wirkverbunden sind.

23. Einrichtung nach einem der Ansprüche 19 bis 22, **dadurch gekennzeichnet**, dass die Mittel zur Erfassung von bedingten Kontextelementen elektronische Zählwerke zur Erfassung von Sequenzpositionen und für Taktsteuerungen interne Taktgeber aufweisen.

24. Einrichtung nach einem der Ansprüche 19 bis 23, **dadurch gekennzeichnet,** dass als Mittel zur Erfassung von aktuellen Kontexten Sensoren (56 bis 59) vorgesehen sind.

25. Einrichtung nach einem der Ansprüche 19 bis 24, **dadurch gekennzeichnet,** dass die Produkte, Produktegruppen oder die voneinander unabhängigen Transportorgane elektronische Speicherorgane zur Speicherung von codierten Eingenschaften der Produkte oder Produktegruppen mit sich führen und dass für die Aktualisierung und Auslessung dieser Speicher Schreib- und/oder Lesegeräte vorgesehen sind.

## Claims

1. A method for processing piece-goods according to which method large numbers of at least similar items are processed by providing the items in streams (PS) of starting products (A), supplying starting products (A) and/or intermediate products (E) into at least one processing step (7, 8, 12, 14, 15, 18, 22, 24, B1 to B3), processing them and conveying them away from the at least one processing step and conveying away processed items as streams (PS) of end products (EP), whereby in the product streams (PS) individual products (p) or product groups (G) are conveyed in a sequence, whereby in the at least one processing step at least one characteristic of the products or product groups (G) can be changed or a product group can be joined with further products or product groups and whereby the sequence of products (p) or product groups (G) is transformed by extracting (AS) and/or introducing (ES) products (p) or product groups (G) into other streams or out of other streams respectively or by extracting or introducing products or product groups from the same and into the same stream, **characterized** in that the sequence transformations (S1, S2, 4, 5, 6, 10, 13, 16, 17, 19, 20, 21, 23, 25, 30 to 38) are controlled according to relevant characteristics of the products or product groups supplied thereto and/or at least partly according to a predetermined sequence to be established and in that the method is at least partly controlled by means of control contexts (K), whereby in each control context (K) at least one conditional context or at least one conditional context group is linked each with one action or one action group such that when an actual context or actual context group coincides with a conditional context or context group the action (A) linked thereto is triggered, whereby at least part of the conditional contexts comprise several context elements, whereby in at least part of the control contexts context elements and actions belonging to different process areas are linked and whereby at least part of the control contexts comprise updating of data and changing of conditional context elements as actions.

2. Method according to claim 1, **characterized** in that the at least one processing step 87, 8, 12, 18) is also controlled according to relevant characteristics of the products or product groups supplied thereto and/or according to a predetermined sequence to be established.

3. Method according to claim 1 or 2, **characterized** in that the streams (PS) of products (p) or product groups (G) which are supplied or conveyed away are clocked or irregular streams (PS).

4. Method according to one of claims 1 to 3, **characterized** in that the sequence transformations (S) and/or processing steps (B) are additionally controlled by a clock-regime or by the presence of an item to be released or processed.

5. Method according to one of claims 1 to 4, **characterized** in that the product streams (PS) into which products (p) or product groups (G) are inserted or from which products or product groups are extracted are streams moving on waiting loops (W) or overtaking paths (U).

6. Method according to one of claims 1 to 5, **characterized** in that the streams which are conveyed away from sequence transformations (S) or are supplied to processing steps (B) are clocked.

7. Method according to one of claims 1 to 6, **characterized** in that the products or product groups are buffered before sequence transformations (S) and/or before processing steps (B).

8. Method according to one of claims 1 to 7, **characterized** in that for controlling sequence transformations and/or processing steps (B), relevant characteristics of products or product groups are registered by sensors (56 to 59) are read in encoded form from electronic memory means carried by the products or product groups or are registered by updating corresponding, centrally stored data sets.

9. Method according to one of claims 1 to 8, **characterized** in that the predetermined sequences are sequences of end products (EP) to be produced or are derived from these.

10. Method according to claim 9, **characterized** in that the predetermined sequences are updated according to process conditions.

11. Method according to one of claims 1 to 10, **characterized** in that at least part of the product streams (PS) are produced by transforming discrete storage units and/or that at least part of the product streams (PS) are transformed into discrete storage units.

12. Method according to one of claims 1 to 11, **characterized** in that the products or product groups are conveyed in the product streams (PS) with the help of individual transport means which are independent of each other.

13. Method according to one of claims 1 to 12, **characterized** in that the starting products (A) are at least partly products of printing machines, that the intermediate products (E) are at least partly parts of printed products and that the end products (EP) are printed products such as newspapers, magazines or brochures with differing characteristics.

14. Controlling method for controlling the processing method according to one of claims 1 to 13, **characterized** in that the processing steps (7, 8, 12, 14, 15, 18, 22, 24, B1 to B3) and sequence transformations (S1, S2, 4, 5, 6, 10, 13, 16, 17, 19, 20, 21, 23, 25, 30 to 38) are controlled by means of control contexts (K) allocated to them, in which control contexts at least one conditional context or at least one conditional context group is linked each to one action or one action group such that coincidence of an actual context or context group with one of the conditional contexts or context groups triggers the action (A) linked thereto, whereby at least part of the conditional contexts consist of a plurality of context elements, whereby in at least part of the control contexts, context elements and actions are linked to each other which belong to different process areas and whereby at least part of the control contexts comprise updating of data and changing of conditional context elements as actions.

15. Controlling method according to claim 14, **characterized** in that conditional contexts and possible actions are stored as data sets, that control contexts (K) are formed from these and are stored in a context library (53) and that from the control contexts (K) context fields (55.1, 55.2, 55.3) for specific processes are formed.

16. Controlling method according to claim 14 or 15, **characterized** in that the conditional and actual contexts comprise characteristics of products, sequence positions and/or temporal conditions.

17. Controlling method according to one of claims 14 to 16, **characterized** in that the actions are real movements of device parts or virtual updating of data sets.

18. Controlling method according to one of claims 14 to 17, **characterized** in that sensor signals, counter readings, clock times and/or updated data sets are registered as actual contexts.

19. Installation for carrying out the method according to one of the claims 1 to 13 which installation comprises processing stations (7, 8, 12, 14, 15, 18, 22, 24, B1 to B3) for processing of starting products (A) and/or intermediate products (E), sequence transformation stations (S1, S2, 4, 5, 6, 10, 13, 16, 17, 19, 20, 21, 23, 25, 30 to 38) for transformation of product sequences in product streams and at least one means for introducing (ES) individual products or product groups into a product stream (PS) or for extracting (AS) products or product groups from a product stream, conveying paths linking processing stations and sequence transformation stations and means for supplying products streams (PS) into processing stations and sequence transformation stations and for conveying product streams (PS) away from processing stations and sequence transformation stations along conveying paths (1 to 3), characterized in that the installation additionally comprises control means for at least partial control of processing stations and sequence transformation stations by means of control contexts and means for registering of actual context elements.

20. Installation according to claim 19, **characterized** in that for transport of individual products (p) or product groups (G) individual transport means being independent from each other are provided.

21. Installation according to one of claims 19 or 20, **characterized** in that the control means comprise a central computer or a network of computers.

22. Installation according to claim 21, **characterized** in that the computer or computers are functionally coupled with memories for databases of conditional contexts, of possible actions and of control contexts.

23. Installation according to one of claims 19 to 22, **characterized** in that the means for registering actual context elements comprise electronic counters for registering sequence positions and internal clock generators for timing.

24. Installation according to one of claims 19 to 23, **characterized** in that for registering of actual contexts sensors (56 to 59) are provided.

25. Installation according to one of claims 19 to 24, **characterized** in that the products, product groups or the individual transport means carry electronic memory means for storing encoded characteristics of the products or product groups and that for updating and reading these memories writing and/or reading devices are provided.

## Revendications

1. Procédé de traitement destiné au traitement de marchandises isolées, par lequel il est possible de traiter un grand nombre d'objets au moins similaires, par le fait que les objets sont acheminés vers le procédé sous forme de flux (PS) de produits initiaux (A), que les produits initiaux (A) et/ou des produits intermédiaires (E) sont acheminés sous forme de flux de produits (PS) vers au moins une étape de traitement (7, 8, 12, 14, 15, 18, 22, 24, B1 à B3), traités et évacués de l'étape de traitement, au moins au nombre d'une, et que les objets traités dans le procédé sont transportés hors du procédé sous forme de flux (PS) de produits finis (EP), dans lequel procédé des produits isolés (p) ou des groupes de produits (G) sont acheminés dans une séquence, les uns derrière les autres, vers ou hors des flux de produits (PS), dans lequel procédé il est possible, dans l'étape de traitement, au moins au nombre d'une, de faire varier une propriété des produits ou groupes de produits ou de combiner un produit ou un groupe de produits avec d'autres produits ou groupes de produits et dans lequel la séquence de produits (p) ou de groupes de produits (G) est transformée en flux de produits (PS) soit par l'exclusion (AS) et/ou l'introduction (ES) de produits (p) ou groupes de produits (G) hors d'autres flux ou dans d'autres flux, soit par l'exclusion ou l'introduction de produits ou groupes de produits hors du même flux vers le même flux, caractérisé en ce que les transformations de séquences (S1, S2, 4, 5, 6, 10, 13, 16, 17, 19, 20, 21, 23, 25, 30 à 38) sont commandées en fonction des propriétés significatives des produits ou groupes de produits acheminés et/ou, au moins partiellement, en fonction d'une séquence prédéfinie à générer, et en ce que le procédé de traitement est commandé au moins partiellement à l'appui de contextes de commande (K), au moins un contexte conditionnel ou au moins un groupe de contextes conditionnel étant relié, dans chaque contexte de commande (K), respectivement à une action ou à un groupe d'actions, de telle sorte que, lorsqu'un contexte actuel ou un groupe de contextes actuels concorde avec l'un des contextes conditionnels ou l'un des groupes de contextes conditionnels, l'action (A) qui y est reliée est déclenchée, au moins une partie des contextes conditionnels étant formée par une pluralité d'éléments de contexte, des éléments de contexte et des actions, qui appartiennent à différents domaines du procédé, étant combinés les uns aux autres dans au moins une partie des contextes de commande, et au moins une partie des contextes de commande contenant, sous forme d'actions, des actualisations de données et des modifications d'éléments de contextes conditionnels.

2. Procédé selon la revendication 1, caractérisé en ce que l'étape de traitement (7, 8, 12, 18), au moins au nombre d'une, est également commandée en fonction des propriétés significatives des produits ou groupes de produits correspondants et/ou en fonction de la séquence prédéfinie à générer.

3. Procédé selon la revendication 1 ou 2, caractérisé en ce que les flux (PS) de produits (p) ou groupes de produits (G), qui sont admis ou évacués, sont des flux (PS) cadencés ou non cadencés.

4. Procédé de traitement selon l'une quelconque des revendications 1 à 3, caractérisé en ce que des transformations de séquences (S) et/ou des étapes de traitement (B) sont commandées, en plus, par un régime cadencé ou par la présence d'un objet à libérer ou à traiter.

5. Procédé de traitement selon l'une quelconque des revendications 1 à 4, caractérisé en ce que les flux de produits (PS), dans lesquels sont inclus des produits (p) ou groupes de produits (G) ou desquels sont exclus des produits ou groupes de produits, sont des flux qui sont acheminés sur des boucles d'attente (W) ou sur des voies de dépassement (U).

6. Procédé de traitement selon l'une quelconque des revendications 1 à 5, caractérisé en ce que les flux, qui sont évacués des transformations de séquences (S) ou acheminés vers les étapes de traitement (B), sont des flux cadencés.

7. Procédé de traitement selon l'une quelconque des revendications 1 à 6, caractérisé en ce que les produits ou groupes de produits sont accumulés en amont des transformations de séquences (S) et/ou en amont des étapes de traitement (B).

8. Procédé de traitement selon l'une quelconque des revendications 1 à 7, caractérisé en ce que les propriétés significatives des produits ou groupes de produits sont enregistrées par des capteurs (56 à 59) pour pouvoir commander les transformations de séquences et/ou les étapes de traitement (B), stockées sous forme codée dans des mémoires électroniques acheminées conjointement avec les produits ou groupes de produits, ou enregistrées par l'actualisation des articles de données correspondants, stockés dans une mémoire centrale.

9. Procédé de traitement selon l'une quelconque des revendications 1 à 8, caractérisé en ce que les séquences prédéfinies sont des séquences de produits finis (EP) à fabriquer ou sont dérivées de ceux-ci.

10. Procédé de traitement selon la revendication 9, caractérisé en ce que les séquences prédéfinies peuvent être actualisées en fonction des états du processus.

11. Procédé de traitement selon l'une quelconque des revendications 1 à 10, caractérisé en ce qu'au moins une partie des flux de produits (PS) est formée par la transformation d'unités de stockage discrètes et/ou en ce qu'au moins une partie des flux de produits (PS) est transformée en unités de stockage discrètes.

12. Procédé de traitement selon l'une quelconque des revendications 1 à 11, caractérisé en ce que les produits ou groupes de produits sont transportés dans les flux de produits (PS) à l'aide d'organes de transport indépendants les uns des autres.

13. Procédé de traitement selon l'une quelconque des revendications 1 à 12, caractérisé en ce que les produits initiaux (A) sont au moins en partie des produits issus de presses à imprimer, en ce que les produits intermédiaires (E) sont au moins en partie des produits partiels pour produits imprimés et en ce que les produits finis (EP) sont des produits imprimés tels que des journaux, des revues ou des brochures avec diverses propriétés les différenciant les uns des autres.

14. Procédé de commande destiné à commander le procédé de traitement selon l'une quelconque des revendications 1 à 13, caractérisé en ce que les étapes du traitement (7, 8, 12, 14, 15, 18, 22, 24, B1 à B3) et les transformations de séquences (S1, S2, 4, 5, 6, 10, 13, 16, 17, 19, 20, 21, 23, 25, 30 à 38) sont commandées au moyen de contextes de commande (K) associés à ceux-ci, dans lesquels au moins un contexte conditionnel ou au moins un groupe de contextes conditionnel sont reliés chacun à une action ou à un groupe d'actions de telle sorte que la concordance entre un contexte actuel ou un groupe de contextes actuel et l'un des contextes conditionnels ou l'un des groupes de contextes conditionnels déclenche l'action (A) qui y est reliée, dans lequel procédé au moins un contexte conditionnel ou au moins un groupe de contextes conditionnel est relié, dans chaque contexte de commande (K), respectivement à une action ou à un groupe d'actions de telle sorte que, lorsqu'un contexte actuel ou un groupe de contextes actuel concorde avec l'un des contextes conditionnels ou l'un des groupes de contextes conditionnels, l'action (A) qui y est reliée est déclenchée, dans lequel procédé au moins une partie des contextes conditionnels est formée par une pluralité d'éléments de contextes, dans lequel procédé des éléments de contexte et des actions, qui appartiennent à plusieurs domaines du procédé, sont combinés entre eux dans au moins une partie des contextes de commande, et dans lequel procédé au moins une partie des contextes de commande contient, sous forme d'actions, des actualisations de données et des modifications d'éléments de contextes conditionnels.

15. Procédé de commande selon la revendication 14, caractérisé en ce que des contextes conditionnels et des actions possibles sont stockés sous forme d'articles de données, en ce que des contextes de commande (K) sont générés à partir de ceux-ci et stockés dans une bibliothèque de contextes (53) et en ce que des champs de contextes (55.1, 55.2, 55.3) sont générés à partir des contextes de commande (K) pour des processus spécifiques.

16. Procédé de commande selon la revendication 14 ou 15, caractérisé en ce que des contextes conditionnels et actuels contiennent des propriétés de produits, positions de séquences et/ou conditions de temps.

17. Procédé de commande selon l'une quelconque des revendications 14 à 16, caractérisé en ce que les actions sont des mouvements réels de parties du dispositif ou des actualisations virtuelles d'articles de données.

18. Procédé de commande selon l'une quelconque des revendications 14 à 17, caractérisé en ce que les signaux des capteurs, les états des compteurs, les horaires et/ou les articles de données actualisés sont enregistrés en tant que contextes actuels.

19. Dispositif destiné à la mise en oeuvre du procédé selon l'une quelconque des revendications 1 à 13, lequel dispositif comprend des stations de traitement (7, 8, 12, 14, 15, 18, 22, 24, B1 à B3) destinées au traitement de produits initiaux (A) et/ou de produits intermédiaires (E), des stations de transformation de séquences (S1, S2, 4, 5, 6, 10, 13, 16, 17, 19, 20, 21, 23, 25, 30 à 38) destinées à transformer les séquences de produits en flux de produits, et comprenant au moins un moyen destiné à l'introduction (ES) de produits isolés ou de groupes de produits dans un flux de produits (PS) ou destiné à l'exclusion (AS) de produits isolés ou de groupes de produits hors d'un flux de produits, des voies de transport, formant un réseau entre les stations de traitement et les stations de transformation de séquences, qui sont destinées à acheminer les flux de produits (PS) vers les stations de traitement et les stations de transformation de séquences et qui sont destinées à évacuer les flux de produits hors des stations de traitement et des stations de transformation de séquences, et des moyens destinés à transporter les flux de produits (PS) le long des voies de transport (1 à 3), caractérisé en ce que le dispositif est muni, en plus, d'organes de commande, destinés à commander au moins partiellement les stations de traitement et les stations de transformation de séquences au moyen de contextes de commande, et d'organes destinés à enregistrer les éléments de contextes actuels.

20. Dispositif selon la revendication 19, caractérisé en ce que, pour le transport des produits isolés (p) ou des groupes de produits (G), il est prévu des organes de transport indépendants les uns des autres.

21. Dispositif selon la revendication 19 ou 20, caractérisé en ce que les organes de commande sont équipés d'un ordinateur central ou d'un réseau d'ordinateurs.

22. Dispositif selon la revendication 21, caractérisé en ce que l'ordinateur ou le réseau d'ordinateurs sont reliés activement avec des bases de données stockées en mémoire pour les contextes conditionnels, pour les actions possibles et pour les contextes de commande.

23. Dispositif selon l'une quelconque des revendications 19 à 22, caractérisé en ce que les organes destinés à l'enregistrement des éléments de contextes conditionnels sont munis de compteurs électroniques destinés à enregistrer les positions des séquences et destinés à commander la cadence des organes internes de réglage de la cadence.

24. Dispositif selon l'une quelconque des revendications 19 à 23, caractérisé en ce que des capteurs (56 à 59) sont prévus en tant que moyens destinés à enregistrer des contextes actuels.

25. Dispositif selon l'une quelconque des revendications 19 à 24, caractérisé en ce que les produits, groupes de produits ou les organes de transport indépendants les uns des autres se déplacent conjointement avec des mémoires électroniques destinées à stocker les propriétés codées des produits ou groupes de produits et en ce qu'il est prévu des organes de lecture et/ou d'écriture pour l'actualisation et la lecture de ces mémoires.
